# EUROPEAN PATENT APPLICATION

(11) **EP 4 712 211 A1**
(43) Date of publication of application: **18.03.2026**
(21) Application number: 25762441.1
(22) Date of filing: 06.02.2025
(51) Int. Cl.: H01M 10/6556, H01M 10/613, H01M 10/625, H01M 10/6568, H01M 10/643, H01M 50/289, H01M 50/233, H01M 50/30, H01M 50/244, H01M 50/249

(54) **BATTERY PACK AND VEHICLE INCLUDING SAME**

(30) Priority: 29.02.2024 KR 20240030177
(71) Applicant: LG Energy Solution, Ltd., Seoul 07335 (KR)
(72) Inventor: JUNG, Min-Yong, Daejeon 34122 (KR); CHOI, Bum, Daejeon 34122 (KR); CHOI, Seung-Bin, Daejeon 34122 (KR); PARK, Jong-Hee, Daejeon 34122 (KR); CHUNG, Jae-Heon, Daejeon 34122 (KR)
(74) Representative: Plasseraud IP
(86) International application number: PCT/KR2025/099305
(87) International publication number: WO 2025/183526

(57) **Abstract**

Provided is a battery pack that does not cause temperature deviations between battery cells depending on the location of the battery cells in the battery pack while directly cooling the battery cells by improving a conventional heat sink cooling method. A battery pack of the present disclosure includes a pack housing including a bottom plate, an outer frame, and a partition frame; and a plurality of battery cell assemblies accommodated in the pack housing, wherein inside the outer frame and the partition frame, a flow path where a cooling fluid is able to flow, and a distribution hole and a recovery hole communicating with the flow path are provided, and thus the cooling fluid is introduced toward the battery cell assembly to directly cool battery cells in the battery cell assembly.

## Description

### TECHNICAL FIELD

The present disclosure relates to a battery pack and a vehicle including the same, and more specifically, to a battery pack having a cooling structure in which a cooling fluid for cooling battery cells is directly applied to the battery cells, and a vehicle including the same. This application is based on and claims priority from Korean Patent Application No. 10-2024-0030177, filed on February 29, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are widely used as a new energy source to improve eco-friendliness and energy efficiency in that they have not only a primary advantage of dramatically reducing the use of fossil fuels but also no by-products generated from the use of energy.

Secondary batteries include lithium-ion batteries, lithium polymer batteries, nickel cadmium batteries, nickel hydrogen batteries, nickel zinc batteries, and the like. An operating voltage of such a unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage or the demanded charging and discharging capacity.

When forming a battery pack by connecting battery cells in series/parallel in this way, it is common to first form a battery module by accommodating a plurality of battery cells in a module case and then to form a battery pack by collecting one or more of these battery modules and adding other components thereto. Recently, a battery pack in the form of a cell to pack in which a plurality of battery cells are not modularized, that is, not accommodated in a module case, but directly accommodated in a pack housing, has also been manufactured.

In a battery pack, technology capable of efficiently cooling heat generated from battery cells is increasingly important as the required battery capacity increases. Currently, a method of indirectly cooling battery cells is applied by assembling a separate heat sink inside the battery pack and releasing heat generated from the battery cells to the outside of the battery pack through heat conduction by a cooling medium circulating inside the heat sink.

However, in the case of this indirect method, the battery pack requires aluminum plate brazing for manufacturing heat sink and many separate parts. If the cooling-related components in the battery pack increase, the volume ratio and weight ratio are not efficient in terms of energy density, which is not preferable.

And, since the cooling medium conducts heat through an aluminum plate, thermal resistance is high, which limits the ability to increase cooling efficiency. Accordingly, there is a limitation in that temperature deviations between one end of the battery cell located near the cooling medium inlet port and the other end that is not are deepened, or the overall cooling efficiency is not satisfactory.

In particular, in the conventional indirect cooling structure, there is a problem of high temperature deviation ΔT between battery cells due to the temperature rise of battery cells under rapid charging conditions and instantaneous high power output. If the temperature deviation is not resolved, problems of safety and durability of the battery pack arise.

If the cooling efficiency is not good, the deterioration of battery cells may be accelerated, or the inability to respond quickly when thermal runaway (TR) occurs in some battery cells may lead to thermal propagation (TP) and, in severe cases, disasters such as ignition and explosion of the battery pack, which may cause not only property damage but also safety issues. In this way, in battery packs with conventional indirect cooling method using a heat sink, TR/TP is highly likely to occur when particular battery cell abnormalities occur.

To solve this problem, there is a need for developing a battery pack having a direct cooling structure in which a cooling medium for cooling battery cells may be directly applied to the battery cells. Even in the case of a battery pack having such a direct cooling structure, it is necessary to be configured such that temperature deviations between battery cells do not occur depending on the location of the battery cell in the battery pack.

Furthermore, it is necessary to maintain airtightness so that the cooling medium does not leak out of the pack housing. In particular, since the cell to pack type battery pack does not have a module case, sealing at the pack housing end is more important.

### DISCLOSURE

### Technical Problem

The present disclosure is directed to providing a battery pack that does not cause temperature deviations between battery cells depending on the location of the battery cells in the battery pack while directly cooling the battery cells by improving a conventional heat sink cooling method.

The present disclosure is also directed to providing a battery pack capable of reducing the possibility of TR/TP occurrence, especially even in a cell to pack type battery pack.

The present disclosure is still also directed to providing a vehicle including such a battery pack.

### Technical Solution

A battery pack of the present disclosure for solving the above problem includes a pack housing including a bottom plate, an outer frame, and a partition frame; and a plurality of battery cell assemblies accommodated in the pack housing, wherein inside the outer frame and the partition frame, a flow path where a cooling fluid is able to flow, and a distribution hole and a recovery hole communicating with the flow path are provided, and thus the cooling fluid is introduced toward the battery cell assembly to directly cool battery cells in the battery cell assembly.

At least a portion of the outer frame and the partition frame may be a hollow metal square pipe.

At least a portion of the outer frame and the partition frame may include hollows, and the hollows of the outer frame and the partition frame may be connected to form the flow path, wherein the flow path may have a structure of at least two layers stacked in the vertical direction.

The battery cell assembly may include a plurality of cylindrical secondary batteries arrayed along columns and rows and standing upright in the vertical direction as the battery cells, a longitudinal dimension of the battery cell assembly may be greater than a widthwise dimension, and a longitudinal direction of the battery cell assembly may be located along a front-back direction of the battery pack.

The outer frame may include a pair of side frames disposed respectively on both sides in a left-right direction on the bottom plate, and a front frame and a rear frame disposed respectively on both sides in a front-back direction, and the partition frame may include a cross frame disposed in a front-back direction on the bottom plate or a center frame disposed in a left-right direction on the bottom plate, wherein the partition frame may divide an internal space of the pack housing into a plurality of cell array spaces, and the battery cell assembly may be individually seated in each of the cell array spaces.

The side frame, the front frame, and the cross frame may be formed in the form of a hollow square pipe, and one or more ribs dividing an internal space into upper and lower parts may be provided in the height direction to allow the hollow internal space to be partitioned into a plurality of parts in the height direction, so that a multilayer structure in which the flow paths are stacked in the height direction may be provided, and the flow paths may be configured such that lower-layer flow paths of the side frame, the front frame, and the cross frame communicate with each other, and upper-layer flow paths of the side frame, the front frame, and the cross frame communicate with each other.

The distribution hole may be formed at a position in which each of the cell array spaces communicates with the upper-layer flow paths, and the recovery hole may be formed at a position in which each of the cell array spaces communicates with the lower-layer flow paths.

An inlet port for introducing the cooling fluid may be formed at a position communicating with the upper-layer flow paths, and an outlet port for discharging the cooling fluid may be provided at a position communicating with the lower-layer flow paths.

The inlet port and the outlet port may be provided in the front frame.

The distribution holes may be located on an inner side of the right side frame and a left side surface of the cross frame, and the recovery holes may be located on a right side surface of the cross frame and an inner side of the left side frame, so that the cooling fluid may be directly introduced into each of the cell array spaces from a longitudinal side of the battery cell assembly through the distribution hole, and be recovered from a longitudinal side of the battery cell assembly through the recovery hole.

The distribution holes and the recovery holes may be disposed to correspond to each of the battery cell assemblies in the outer frame and the partition frame surrounding the cell array space, and the cooling fluid in the flow path may be distributed to each of the cell array spaces and recovered and discharged along an independent discharge path.

The pack housing may include a top opening, and may further include a filling member sealing the top opening.

The filling member may be provided with a potting resin.

The battery pack may further include a top frame adhered and coupled to a top surface of the outer frame by an adhesive.

The battery cell may include a vent portion at a bottom, and the bottom plate may include a press-molded groove portion to allow the battery cell assembly to be seated thereon and further include a plastic supporter on the groove portion, wherein gas or flame ejected through the vent portion may move along a venting flow path defined by the plastic supporter in the groove portion.

To maintain a dense arrangement of the battery cells, the battery cell assembly may include a holder accommodating a lower portion of the battery cell; a middle frame supporting a position that is higher than the position supported by the holder in the battery cell; and an adhesive member fixing the holder and the battery cell.

The holder may include a body having a plurality of receiving grooves disposed side by side with each other so that each of the battery cells is inserted; and a spacer included between the receiving grooves and configured to maintain a gap between the battery cells.

A cooling flow path space may be formed between the holder and the middle frame to allow the cooling fluid to be filled, and the middle frame may isolate the cooling fluid from the filling member.

For solving the above other problem, the present disclosure also provides a vehicle including a battery pack according to the present disclosure.

### Advantageous Effects

The present disclosure provides a battery pack of a direct cooling method that cools battery cells by introducing and circulating a cooling fluid for cooling the battery cells inside the battery pack to be in direct contact with the battery cells. This battery pack is implemented by immersion cooling with excellent cooling performance. Since the battery pack according to the present disclosure has excellent cooling performance compared to an indirect cooling method using a conventional heat sink, it may solve heat generation problem, especially, the heat generation problem due to the rapid charging requirements. According to the present disclosure, the battery pack may secure competitiveness by providing a differentiated solution to solve the heat generation problem due to the rapid charging requirements of customers.

According to one configuration of the present disclosure, it is possible to implement a flow path structure in which the cooling fluid may move by using hollow square pipes in the frames constituting the pack housing. By eliminating a separate heat sink and related parts, cost savings and improved energy density may be realized.

Additionally, in the present disclosure, the cooling performance of the battery cell may be improved through uniform distribution and recovery of the cooling fluid in the battery pack, and short-range flow, and each battery cell may be uniformly cooled regardless of the position of the battery cell within the battery pack. Accordingly, deviations of heating temperature may be minimized. Therefore, the cooling efficiency may be further improved by minimizing temperature deviations between each battery cell.

According to one configuration of the present disclosure, there is also provided a battery pack that implements a waterproof sealed structure by simplifying the structure in a cell to pack type battery pack and improves cooling efficiency by applying an immersion cooling method. According to one configuration of the present disclosure, it is possible to configure an efficient cooling flow path in which the cooling fluid circulates throughout the battery pack from the inlet port to the outlet port without a separate heat sink in a cell to pack type battery pack. Assembly complexity/ease of assembly is greatly improved by reducing the number of components required for the cooling line configuration.

According to this present disclosure, it is possible to maintain thermal balance between battery cells by improving cooling efficiency. Additionally, both general cooling water for vehicles and insulating oil may be used through the cooling path space implemented inside the battery pack. According to the present disclosure, it may be configured to use cooling water or insulating oil that is circulated through a cooling system of a vehicle while maintaining sealability so that the cooling water or insulating oil does not leak.

According to the present disclosure, by implementing an immersion cooling structure, the TR/TP reliability is improved by suppressing the temperature rise of a particular battery cell. Since the surrounding battery cells may be protected in the event of TR/TP due to abnormalities of some battery cells, a battery pack having particularly secured safety may be provided, and the safety of a vehicle including the same may be sufficiently guaranteed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view of a battery pack according to an embodiment of the present disclosure.
FIG. 2 is a top view of a pack housing included in the battery pack of FIG. 1.
FIG. 3 is a modified example of FIG. 2.
FIG. 4 is an exploded view showing frames for describing a flow path configuration in the pack housing of FIG. 2.
FIG. 5 is a schematic view showing a cooling fluid flow in the battery pack of FIG. 1.
FIG. 6 is a perspective view of a battery pack according to another embodiment of the present disclosure.
FIG. 7 is a partially exploded perspective view of the battery pack of FIG. 6.
FIG. 8 is a cross-sectional view taken along line I-I' of FIG. 6.
FIG. 9 is a cross-sectional view taken along line II-II' of FIG. 6.
FIG. 10 is a view for describing a battery cell assembly included in the battery pack of FIG. 6.
FIG. 11 is a perspective view of a pack housing included in the battery pack of FIG. 6.
FIG. 12 is an exploded perspective view of the pack housing shown in FIG. 11.
FIG. 13 shows frames of the pack housing shown in FIG. 11.
FIG. 14 is a perspective view of the pack housing at a different angle from FIG. 11 to show an inlet port and an outlet port in the battery pack of FIG. 6.
FIG. 15 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiment described in this specification and the configuration shown in the drawings are only a most preferred embodiment of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted. Furthermore, since identical or similar reference numerals refer to identical or similar members, redundant or repeated descriptions in various embodiments will be omitted.

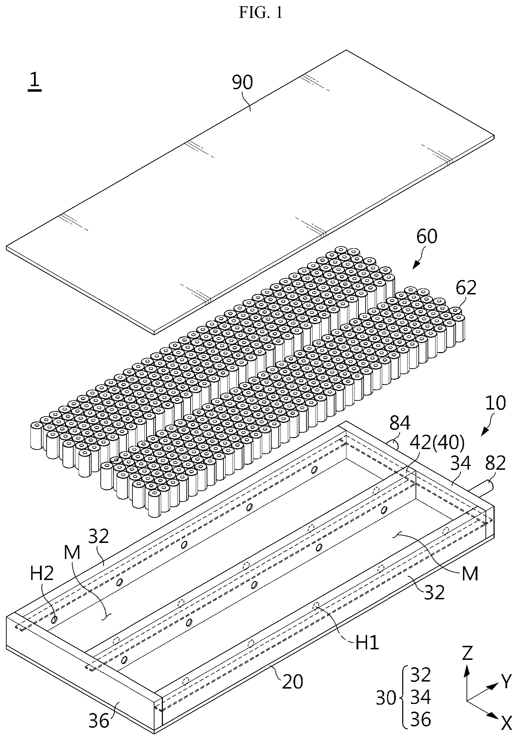

FIG. 1 is an exploded perspective view of a battery pack according to an embodiment of the present disclosure.

Referring to FIG. 1, a battery pack 1 according to an embodiment of the present disclosure includes a pack housing 10, a plurality of battery cell assemblies 60, and a top frame 90.

The pack housing 10 is a container accommodating the battery cell assemblies 60 and may be disposed at a predetermined location in a vehicle. The pack housing 10 may include a bottom plate 20, an outer frame 30, and a partition frame 40.

The battery cell assembly 60 may include a plurality of battery cells 62. The plurality of battery cells 62 may be electrically connected to each other. The battery cell assembly 60 may be provided in a roughly cuboidal form having a width (X-direction dimension), a length (Y-direction dimension), and a height (Z-direction dimension). At this time, the length may be longer than the width. The width also refers to a dimension along the width direction (or left-right direction) of the battery pack 1, and the length refers to a dimension along the longitudinal direction (or front-back direction) of the battery pack 1. The battery cell assembly 60 does not include a separate module case that surrounds and accommodates the entire plurality of battery cells 62, and the battery pack 1 may be implemented as a battery pack in the form of a cell to pack.

The battery cell 62 refers to a secondary battery that includes an electrode assembly, an electrolyte, a battery case, and the like, and may be provided as a cylindrical secondary battery, a pouch-type secondary battery, or a prismatic secondary battery. Hereinafter, in this embodiment, a plurality of battery cells 62 are described as being limited to cylindrical secondary batteries as shown in FIG. 1. These battery cells 62 may be a plurality of cylindrical batteries that are arrayed along columns (Y direction) and rows (X direction) and stand upright in a vertical direction (Z direction). As an example, the battery cell 62 may be a 4680-type battery cell. Here, 4680 represents a form factor. The first two numbers in the form factor represent the diameter of the secondary battery, and the remaining numbers represent the height of the secondary battery. The 4680 cell is highly efficient and large in size compared to the existing 18650 cell or 21700 cell.

The bottom plate 20 provides a space for the battery cell assembly 60 to be placed, and may be configured in the form of a flat plate having an approximately large area, and may be positioned below the battery cell assembly 60 to support and cover the bottom of each battery cell assembly 60.

The outer frame 30 and the partition frame 40 are vertically coupled to the bottom plate 20 and may also be coupled to each other. Each of the outer frame 30 and the partition frame 40 may be an extruded structure of metal. In particular, at least a portion of the outer frame 30 and the partition frame 40 may be a hollow square pipe manufactured by extruding a metal such as aluminum with a hollow space and ribs mixed therein. The frames 30, 40 may be welded and/or bolted to the bottom plate 20 to form the pack housing 10, preferably assembled by welding.

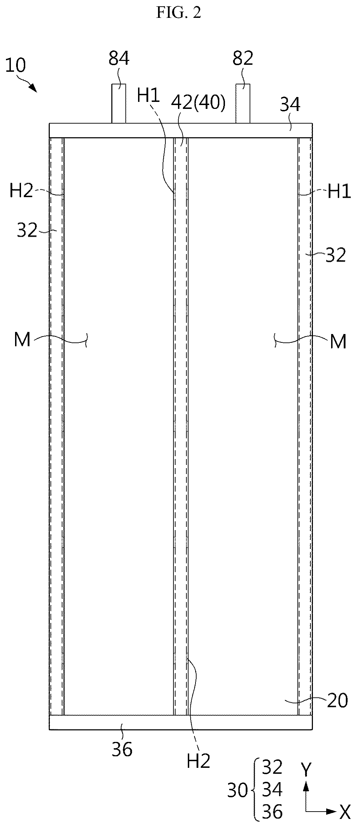

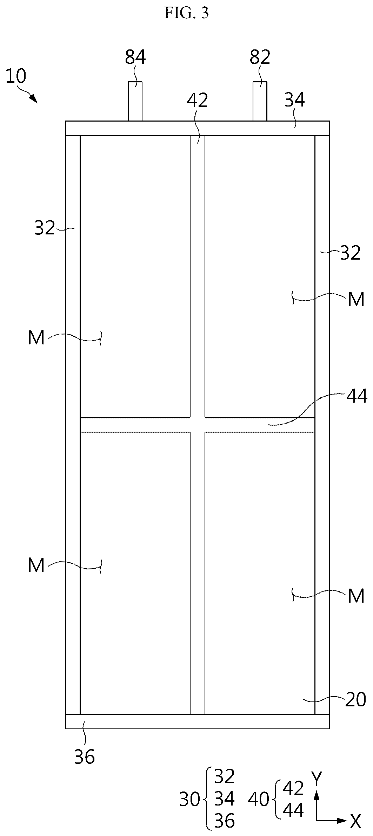

FIG. 2 is a top view of a pack housing included in the battery pack of FIG. 1, and FIG. 3 is a modified example of FIG. 2.

Referring to FIGS. 1 to 3, the outer frame 30 is formed at a predetermined height on the outer side of the bottom plate 20, and at least a portion of the outer frame 30 may be a hollow square pipe as previously mentioned. For example, the outer frame 30 may be composed of a pair of side frames 32 disposed respectively on both sides in a left-right direction on the bottom plate 20, and a front frame 34 and a rear frame 36 disposed respectively on both sides in a front-back direction, and these may be disposed on the sides, front, and rear sides of the bottom plate 20, respectively. The side frame 32, the front frame 34, and the rear frame 36 may be, as separate parts separated from each other, assembled together, or they may be integral parts connected to each other. Assembly may be performed in various ways such as fitting, bolting, adhesion, welding, or the like, and welding is preferred. The outer frame 30 is vertically coupled along the perimeter of the edge of the bottom plate 20 to form a wall. In the pack housing 10, the front frame 34 may form a front wall, the rear frame 36 may form a rear wall, and the side frame 32 may form a left side wall and a right side wall, respectively.

The partition frame 40 divides an internal space formed by the bottom plate 20 and the outer frame 30, that is, an internal space defined in a box form by the bottom plate 20 and the outer frame 30, into a plurality of ones, and at least a portion of the partition frame 40 may be a hollow square pipe as previously mentioned.

In FIGS. 1 and 2, the partition frame 40 includes a cross frame 42. In the modified example shown in FIG. 3, the partition frame 40 includes a cross frame 42 and a center frame 44. As such, the partition frame 40 may include the cross frame 42 and/or the center frame 44. The cross frame 42 may refer to the partition frame 40 disposed in a front-back direction on the bottom plate 20, and the center frame 44 may refer to the partition frame 40 disposed in a left-right direction on the bottom plate 20. The cross frame 42 may be coupled at both ends to the front frame 34 and the rear frame 36. The center frame 44 may be coupled at both ends to the left and right side frames 32. The pack housing 10 shown in FIG. 2 has only the cross frame 42 without the center frame 44 as shown in FIG. 3. On the contrary, it is also possible for the pack housing 10 to have the center frame 44 without the cross frame 42. In the modified example shown in FIG. 3, the partition frame 40 includes one cross frame 42 and one center frame 44. The number of cross frames 42 and center frames 44 may vary.

The battery cell assembly 60 may be positioned so that its longitudinal direction is along a front-back direction of the battery pack 1. Then, the side frame 32 and the cross frame 42 extend along the longitudinal direction of the battery cell assembly 60. The battery cell assembly 60 may be positioned so that its width direction is along a left-right direction of the battery pack 1. Then, the front frame 34 and the rear frame 36 extend along the width direction of the battery cell assembly 60. When the pack housing 10 also includes the center frame 44, the center frame 44 also extends along the width direction of the battery cell assembly 60.

To accommodate two or more battery cell assemblies 60, there may be one or more cross frames 42 only or one or more center frames 44 only. To accommodate four or more battery cell assemblies 60, one or more cross frames 42 and one or more center frames 44 may be included. It will be seen that the number of center frames 44 and the number of cross frames 42 included in the pack housing 10 may vary as much as possible from those shown in FIGS. 2 and 3 depending on the size and aspect ratio of the battery pack 1, the size and aspect ratio of the battery cell assemblies 60, and the like. In this way, the internal space of the pack housing 10 may be divided into a plurality of zones by the partition frame 40, that is, the cross frame 42 and/or the center frame 44, and the battery cell assemblies 60 may be individually seated in each of the zones. At this time, each of the zones may be defined as a cell array space M in the present disclosure. In the present disclosure, the battery cell assembly 60 may be individually seated in each of the plurality of cell array spaces M. The battery cell assembly 60 may be in a nearly cuboidal form to be arranged neatly in the pack housing 10, and each battery cell assembly 60 may be connected to secure the power required for driving a vehicle.

In the case of an example where the pack housing 10 includes only one cross frame 42 as a partition frame 40 as in FIGS. 1 and 2, there are two cell array spaces M and two battery cell assemblies 60 may be accommodated. At this time, the battery cell assemblies 60 are accommodated side by side in a left-to-right direction. The longitudinal side of the left battery cell assembly 60 faces the inner side of the left side frame 32, that is, the right side, and the left side of the cross frame 42. The longitudinal side of the right battery cell assembly 60 faces the right side of the cross frame 42 and the inner side of the right side frame 32, that is, the left side. The widthwise side of each battery cell assembly 60 faces the inner side of the front frame 34 and the inner side of the rear frame 36.

In the case of an example where the pack housing 10 includes only one center frame 44, the number of cell array spaces M and battery cell assemblies 60 is still two, but the battery cell assemblies 60 are accommodated side by side in a front-back direction. The longitudinal side of each battery cell assembly 60 faces the inner side of the left side frame 32 and the inner side of the right side frame 32. The widthwise side of the battery cell assembly 60 located at the front faces the inner side of the front frame 34 and the front side of the center frame 44, and the widthwise side of the other battery cell assembly 60 located at the rear faces the rear side of the center frame 44 and the inner side of the rear frame 36.

Additionally, in the example of FIG. 3, four cell array spaces M are provided and four battery cell assemblies 60 are accommodated. In each cell array space M, each battery cell assembly 60 is configured to have a structure in which the sides are surrounded by the outer frame 30 and the partition frame 40. Additionally, since the battery cell assemblies 60 are individually seated in each of the plurality of cell array spaces M, the battery cell assemblies 60 may be separated from other battery cell assemblies 60 seated in other cell array spaces M and prevented from affecting each other.

As such, in the present disclosure, each battery cell assembly 60 is individually seated in each cell array space M, and may be surrounded on the side by the outer frame 30 and the partition frame 40 to be accommodated inside the battery pack 1 by being separated from other battery cell assemblies 60, so that it is safe, and all the battery cell assemblies 60 may be placed under similar conditions.

Referring mainly to FIG. 1, the battery cell assembly 60 may be packaged so as not to be exposed to the outside by the pack housing 10 and the top frame 90. A sealing member (not shown) such as a gasket may be provided between the pack housing 10 and the top frame 90 to seal them. For example, the sealing member may be in the form of a band that follows the edge shape of the pack housing 10. The sealing member may be made of a material having a predetermined elasticity so as to stably exert a desired sealing force by the pressure applied when the pack housing 10 and the top frame 90 are coupled, and may be compressed or deformed in the vertical direction by the pressure. The sealing member may be made of a rubber material or the like, for example EPDM.

The battery pack 1 may have a roughly cuboidal appearance due to the coupling of the pack housing 10 and the top frame 90. When the battery pack 1 is mounted on an electric vehicle such as an EV or HEV, the mounting space is limited due to vehicle components disposed at a high degree of integration, and thus the battery pack 1 is preferably formed in a cuboidal structure so that it may be mounted in a narrow space such as between the driver's seat and the passenger seat.

In the example shown in FIG. 1, the top frame 90 is expressed roughly as a plate shape, but the top frame 90 may also have a flat box lid shape with an inner receiving space and an open bottom. The top frame 90 may be made of an insulating resin for electrical insulation. For example, the top frame 90 may be manufactured as a plastic injection molded product. This top frame 90 may have the advantage of not only ensuring insulation from the battery cell assembly 60, but also ensuring convenience in processing and requiring less manufacturing labor.

Since the pack housing 10 provides mechanical support for the battery cell assembly 60 and serves to protect it from external impacts or the like, it is preferable to manufacture the pack housing 10 with a metal material having high rigidity. It may be preferable for the entire pack housing 10 to be made of a metal material having high mechanical rigidity. For example, the outer frame 30 and the partition frame 40 may be made of aluminum or steel, and the bottom plate 20 may also be made of aluminum or steel, preferably aluminum for weight reduction and ease of processing. When the pack housing 10 is made of a metal material, an insulating sheet (not shown) may be further included on the bottom plate 20 to provide insulation. For example, the insulating sheet may be a polycarbonate sheet. As another example, an insulating coating layer may be included on the top surface of the bottom plate 20. The insulating coating layer may be formed by coating, applying, or attaching an insulating material of any one of silicone resin, polyamide, and rubber. According to this insulating coating layer configuration, the insulating coating effect may be maximized with a minimum amount of coating. Additionally, the insulating coating layer is applied to the top surface of the bottom plate 20, and thus the insulation between the battery cell assembly 60 and the bottom plate 20 may be enhanced. As another example, the pack housing 10 may be manufactured with at least some of its components as plastic injection molded product. For example, the outer frame 30 and the partition frame 40 may be made of metal, and the bottom plate 20 may be made of a plastic material to reduce weight. At this time, the bottom plate 20 may be made of a plastic material (e.g., polycarbonate or the like) having both insulation and flame retardancy.

In particular, at least a portion of the outer frame 30 and the partition frame 40 may preferably be aluminum hollow square pipes. By manufacturing the outer frame 30 and the partition frame 40 with aluminum hollow square pipes and welding them together to form the pack housing 10, the weight of the pack housing 10 may be reduced and the mechanical rigidity may be maintained at a reliable level or higher. Additionally, the hollows within the square pipes may be intended to reduce the weight of the frames 30, 40 and simultaneously may serve as a passage for cooling fluid capable of cooling the battery cell assembly 60 inside the battery pack 1. The passage for the cooling fluid, that is, the flow path, may be configured by connecting the hollows of the frames 30, 40, and the flow path may have a structure of at least two layers stacked in the vertical direction. In this way, by utilizing the internal hollow space of the frames 30, 40 rather than configuring the flow path separately, the fastening structure may also be simplified while increasing process efficiency, and energy density may be increased by increasing the utilization rate of the internal space of the battery pack 1.

In FIGS. 1 to 3, it is shown that a plurality of holes H1, H2 are formed in the frames 30, 40 surrounding each cell array space M to communicate between each cell array space M and the flow path inside the frames 30, 40. In FIGS. 1 to 3, reference numeral 82 is an inlet port where cooling fluid may be introduced into the flow path, and reference numeral 84 is an outlet port where cooling fluid may be discharged from the flow path.

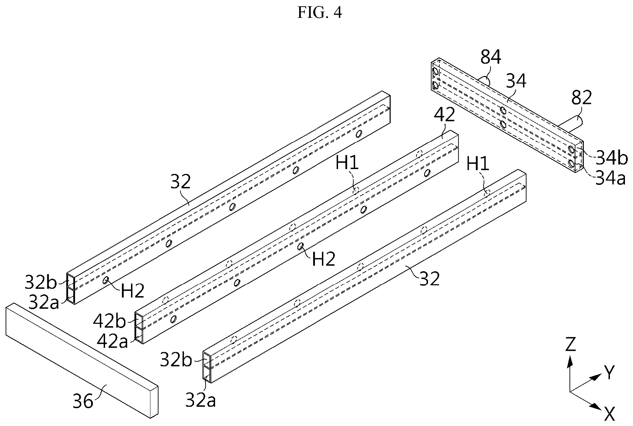

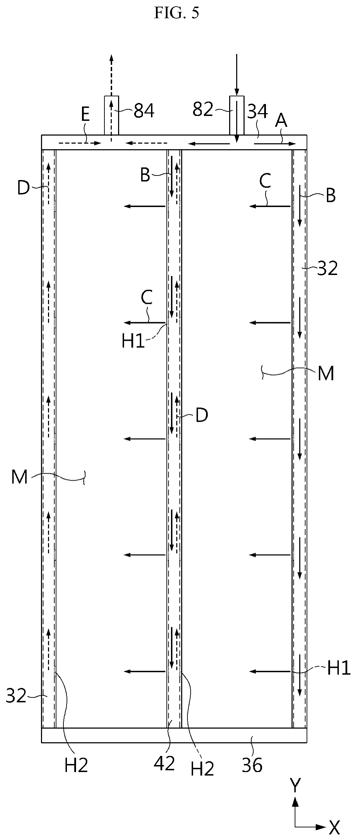

As will be described in detail with reference to FIGS. 4 and 5 below, the cooling fluid may be introduced from the inlet port 82 and distributed toward the battery cells 62 through the distribution hole H1 to directly cool the battery cells 62. The cooling fluid may be filled between the battery cells 62 or may flow between the battery cells 62. The cooling fluid may be recovered through the recovery hole H2 and discharged to the outside of the battery pack 1 through the outlet port 84. The cooling fluid may be cooling water, but is preferably a liquid having insulating properties. In particular, it may be insulating oil. Insulating oil has high withstand voltage performance. Short circuits or safety issues due to leakage may be prevented by using insulating oil. Insulating oil has no vaporization characteristics, and thus it may be used semi-permanently without replacement. Insulating oil such as 3M Novec or the like may be used as the insulating oil. Such insulating oil has excellent insulating performance, so that cooling by direct contact with the battery cells 62 is possible, and since its boiling points vary, phase change cooling may be applied. The battery pack 1 may be mounted in a vehicle such as an electric vehicle including an EV or a HEV, and the insulating oil may be an oil similar to the engine oil or gear oil of the vehicle.

The cooling fluid may be a phase change material (PCM). The phase change material may cycle through vaporization and liquefaction, and may be prepared as a fluorine-based material having a low boiling point for more effective circulation. For example, the phase change material may be prepared as a material having a boiling point of 35 °C to 50 °C. In addition, the phase change material may include a material having a fire extinguishing function. Accordingly, even if a fire occurs inside the battery pack 1, the fire may be quickly extinguished by the phase change material.

According to the present disclosure, a battery pack 1 with a direct cooling method using cooling fluid may be implemented. This battery pack 1 may maintain thermal balance between battery cells 62 by improving cooling efficiency. Additionally, both general cooling water for vehicles and insulating oil may be used through the cooling path space implemented inside the battery pack 1.

When the outer frame 30 and the partition frame 40 are manufactured into hollow square pipes and then welded so that at least some of the hollows may communicate with each other as intended, the temperature of the battery cell assembly 60 may be lowered by allowing cooling fluid to enter/circulate through the hollows along an intended path to absorb and discharge heat generated in the battery cell assembly 60. In particular, when at least some of the hollows communicate with each other, a cooling fluid passage through which cooling fluid is supplied to the battery cell assembly 60 over a short distance and recovered over a short distance may be formed.

FIG. 4 is an exploded view showing frames for describing a flow path configuration in the pack housing of FIG. 2.

In FIG. 4, it is exemplified that a flow path through which cooling fluid may flow is provided inside the side frame 32 and the front frame 34 of the outer frame 30, and a flow path through which cooling fluid may flow is provided inside the cross frame 42 of the partition frame 40. Referring to FIG. 4, in this embodiment, the side frame 32, the front frame 34, and the cross frame 42 are formed in the form of a hollow square pipe, and one or more ribs dividing the internal space into upper and lower parts are provided in the height direction to allow the hollow internal space to be partitioned into a plurality of parts in the height direction, so that there is provided a multilayer structure in which flow paths 32a, 32b are stacked in the height direction in the side frame 32, flow paths 34a, 34b are stacked in the height direction in the front frame 34, and flow paths 42a, 42b are stacked in the height direction in the cross frame 42.

When flow paths are provided in the outer frame 30 or the partition frame 40 in this way, these flow paths may communicate with each other. The flow paths may be configured such that the lower-layer hollows, that is, the flow paths 32a, 34a, 42a of the lower space, communicate with each other, and the upper-layer hollows, that is, the flow paths 32b, 34b, 42b of the upper space, communicate with each other. In this way, it is possible to implement a flow path structure in which the cooling fluid may move by using aluminum hollow square pipes in the frames 30, 40. A thermal runaway in which a fire breaks out in a battery cell due to overcharge or the like may occur, but in order to prevent the occurrence of such a thermal runaway situation, the present disclosure proposes a configuration in which cooling fluid paths are provided inside the outer frame 30 and the partition frame 40 constituting the pack housing 10 to cool the battery cell 62 by directly supplying the cooling fluid into the battery pack 1, so that the cooling fluid may be circulated through the flow paths to discharge the heat of the battery cell 62 to the outside. By eliminating a separate heat sink and related parts, cost savings and improved energy density may be realized.

Referring to FIGS. 1, 2, and 4 together, in each cell array space M, a longitudinal side of each battery cell assembly 60 faces the side frame 32 and the cross frame 42. In each cell array space M, a widthwise side of each battery cell assembly 60 faces the front frame 34 and the rear frame 36. At this time, a plurality of holes H1, H2 for communicating each cell array space M with the flow paths 32a, 32b, 34a, 34b, 42a, 42b may be formed in the frames 30, 40 surrounding each cell array space M. The number and positions of the holes H1, H2 may be configured variously as needed. Preferably, the distribution hole H1 allows the cooling fluid to be supplied to the battery cell assembly 60 seated within each cell array space M over a short distance. The recovery hole H2 allows the cooling fluid to be recovered from the battery cell assembly 60 seated within each cell array space M over a short distance.

In this embodiment, the distribution hole H1 may be formed at a position that communicates each cell array space M with the upper-layer flow paths 32b, 34b, 42b. The recovery hole H2 may be formed at a position that communicates each cell array space M with the lower-layer flow paths 32a, 34a, 42a. Additionally, only the distribution hole H1 may be formed in the right side frame 32, only the recovery hole H2 may be formed in the left side frame 32, and both the distribution hole H1 and the recovery hole H2 may be formed in the cross frame 42. In particular, the distribution hole H1 and the recovery hole H2 may be formed at opposite sides in the cross frame 42.

The battery pack 1 further includes an inlet port 82 for introducing cooling fluid and an outlet port 84 for discharging cooling fluid. In this embodiment, the inlet port 82 is provided in the front frame 34 at a position communicating with the upper-layer flow paths 32b, 34b, 42b. The outlet port 84 is provided in the front frame 34 at a position communicating with the lower-layer flow paths 32a, 34a, 42a. The inlet port 82 and the outlet port 84 may be provided at approximately the center of the front frame 34 to uniformly distribute and recover the cooling fluid. As another example, the inlet port 82 may be provided at the left end or the right end of the upper-layer flow path 34b of the front frame 34, and the outlet port 84 may be provided at the end of the lower-layer flow path 34a below the inlet port 82. As still another example, the inlet port 82 may be provided at the left end of the upper-layer flow path 34b of the front frame 34, and the outlet port 84 may be provided at the right end of the lower-layer flow path 34a. The upper-layer flows paths 32b, 34b, 42b do not communicate with the lower-layer flow paths 32a, 34a, 42a.

The cooling fluid introduced into the inlet port 82 may move along the upper-layer flow paths 32b, 34b, 42b and flow into each cell array space M from the distribution hole H1 to cool the battery cell 62, and may flow into the recovery hole H2 and move along the lower-layer flow paths 32a, 34a, 42a to be discharged through the outlet port 84. Through this, the battery pack 1 may be implemented as a battery pack of a direct cooling method that cools the battery cell 62 by introducing and circulating cooling fluid such as cooling water or insulating oil into the inside thereof to be in direct contact with the battery cell 62. This battery pack 1 is an immersion cooling battery pack with excellent cooling performance. Since the battery pack 1 has excellent cooling performance compared to the indirect method using a conventional heat sink, it may solve heat generation problem, particularly, the heat generation problem due to the rapid charging requirements. The battery pack 1 may secure competitiveness by providing a differentiated solution to solve the heat generation problem due to the rapid charging requirements of customers.

In this embodiment, it can be said that the upper-layer flow paths 32b, 34b, 42b constitute cooling fluid supply flow paths, and the lower-layer flow paths 32a, 34a, 42a constitute cooling fluid discharge flow paths. That is, the cooling fluid supply flow paths are disposed at a higher position than the cooling fluid discharge flow paths.

FIG. 5 is a schematic view showing a cooling fluid flow in the battery pack of FIG. 1.

Referring to FIGS. 4 and 5, in this embodiment, cooling fluid is introduced into the frames 30, 40, particularly into the upper-layer flow path 34b of the front frame 34, through the inlet port 82. The cooling fluid flows along the flow path 34b (arrow A) and is distributed to other upper-layer flow paths 32b, 42b communicating with the flow path 34b (arrow B). The cooling fluid introduced into the upper-layer flow paths 32b, 42b moves along the flow paths 32b, 42b and directly flows into each cell array space M inside the battery pack 1 from the longitudinal side of the battery cell assembly 60 through the distribution hole H1 communicating therewith (arrow C). The introduced cooling fluid cools the battery cell 62 while moving along the width direction of the battery cell assembly 60 and then flows into the recovery hole H2. The cooling fluid is recovered from the longitudinal side of the battery cell assembly 60 through the recovery hole H2 over a short distance. The recovery hole H2 communicates with the lower-layer flow paths 32a, 42a. The cooling fluid entering the recovery hole H2 flows along the lower-layer flow paths 32a, 42a (arrow D) and then flows into the lower-layer flow path 34a of the front frame 34 communicating therewith. An outlet port 84 is provided here, so that the cooling fluid moving along the flow path 34a (arrow E) may be discharged to the outside of the battery pack 1 through the outlet port 84. By placing the distribution hole H1 at a position facing the longitudinal side of the battery cell assembly 60 in this way, the cooling fluid may meet the battery cell 62 over a short distance, and by placing the recovery hole H2 at a position facing the longitudinal side of the battery cell assembly 60 in the position facing the distribution hole H1, the cooling fluid heated by taking heat from the battery cell 62 may be quickly recovered. That is, according to the present disclosure, the cooling fluid may be moved over a short distance within each cell array space M to maximize cooling efficiency.

In this way, the flow paths 32b, 34b, 42b for introducing the cooling fluid and the flow paths 32a, 34a, 42a for recovering the cooling fluid may be configured in a vertically stacked form inside the frames 30, 40, and the distribution hole H1 may be formed on a side facing the longitudinal side of the battery cell assembly 60 in the frames 30, 40 while communicating with the flow paths 32b, 34b, 42b for introducing the cooling fluid inside the frames 30, 40, thereby allowing the cooling fluid to be introduced toward the battery cell assembly 60 along the width direction, which is a shorter distance between the longitudinal direction and the width direction. With respect to the battery cell assembly 60, the cooling fluid flows for a short distance along the width direction and is then recovered directly through the recovery hole H2 that communicates with the flow paths 32a, 34a, 42a for recovering the cooling fluid inside the frames 30, 40 and is formed on a side facing the longitudinal other side of the battery cell assembly 60 in the frames 30, 40.

According to the present disclosure, each cell array space M may have a structure in which the side is surrounded by the partition frame 40, or may have a structure in which the side is surrounded by the outer frame 30 and the partition frame 40. The holes H1, H2 are disposed to correspond to each battery cell assembly 60 in the frames 30, 40 surrounding each cell array space M. The cooling fluid introduced from the inlet port 82 is distributed almost similarly to all the battery cell assemblies 60 through the upper space flow paths 32b, 34b, 42b and flows at a similar flow distance in each cell array space M, and then may be recovered and discharged along an independent discharge path through the lower space flow paths 32a, 34a, 42a. By using the sealed structure by the top frame 90, the cooling fluid cooling any one battery cell assembly 60 and the cooling fluid cooling the other battery cell assembly 60 may be configured to circulate along independent flow paths without mixing and affecting each other.

As such, according to the present disclosure, it is possible to directly cool the battery cell 62 using cooling water or insulating oil that is circulated through a cooling system of a vehicle while maintaining sealability so that the cooling water or insulating oil does not leak, to improve the cooling performance of the battery cell 62 through uniform distribution and recovery of the cooling fluid within the battery pack 1 and short-range flow, and to uniformly cool each battery cell 62 regardless of the position of the battery cell 62 within the battery pack 1. Accordingly, deviations of heating temperature may be minimized. Therefore, the cooling efficiency may be further improved by minimizing temperature deviations between each battery cell 62.

According to the present disclosure, by implementing an immersion cooling structure, the TR/TP reliability is improved by suppressing the temperature rise of a particular battery cell. Since the surrounding battery cells may be protected in the event of TR/TP due to abnormalities of some battery cells, a battery pack having particularly secured safety may be provided, and the safety of a vehicle including the same may be sufficiently guaranteed.

By regulating the rate of inflow and discharge of the cooling fluid, the battery pack 1 may be filled with the cooling fluid for immersion cooling or may be cooled without filling. When the cooling fluid is fully filled, it is possible to prevent unbalanced cooling from occurring depending on the angle at which the battery is in operation, for example, when driving an electric vehicle on a slope. According to the present disclosure, cooling may be performed while the cooling fluid flows in a fully filled state inside the battery pack 1.

According to the present disclosure, cooling may also be performed while the cooling fluid flows in a non-fully filled state inside the battery pack 1. When used without being fully filled, it is preferred to apply cooling using a phase change of the insulating oil.

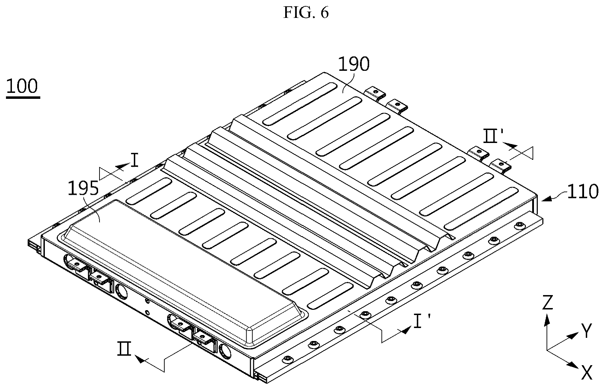

Hereinafter, a battery pack 100 according to another embodiment of the present disclosure will be described with reference to FIGS. 6 to 14. In the following drawings, reference numerals that are identical or similar to those assigned in FIGS. 1 to 5 refer to identical or similar members. For example, the pack housing 10 in FIG. 1 corresponds to the pack housing 110 below. A redundant description of the previous descriptions will be omitted below, but it will be seen that the same or modified description may be applied to the following embodiments.

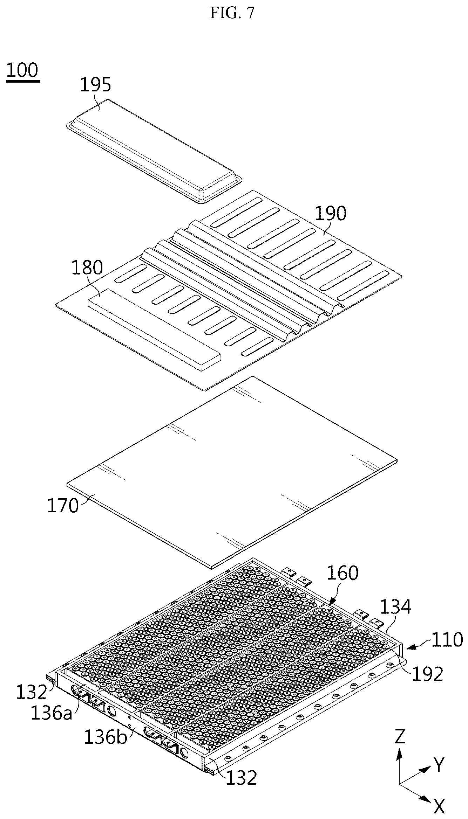

FIG. 6 is a perspective view of a battery pack according to another embodiment of the present disclosure, and FIG. 7 is a partially exploded perspective view of the battery pack of FIG. 6.

Referring to FIGS. 6 and 7, a battery pack 100 includes a pack housing 110, a plurality of battery cell assemblies 160, a filling member 170, and a top frame 190.

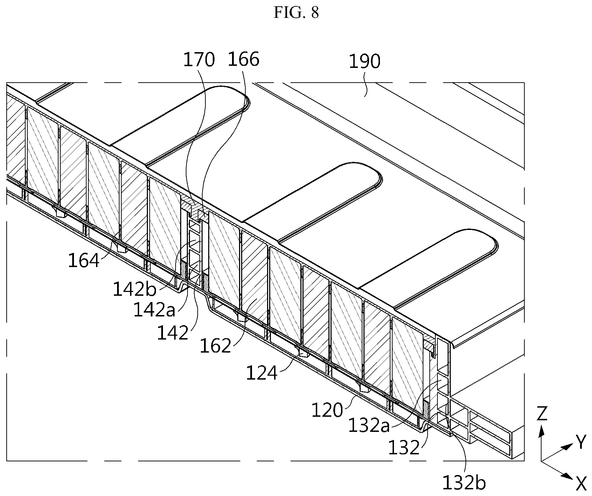

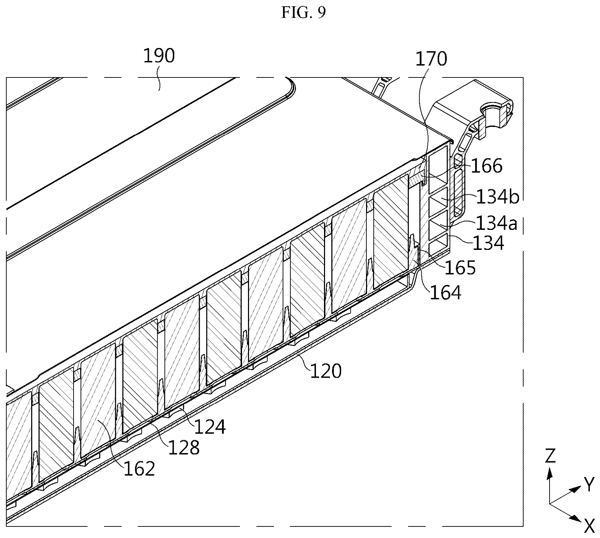

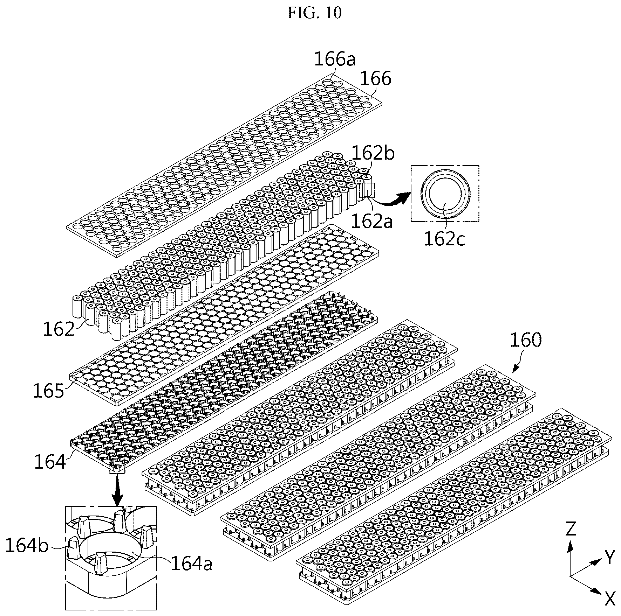

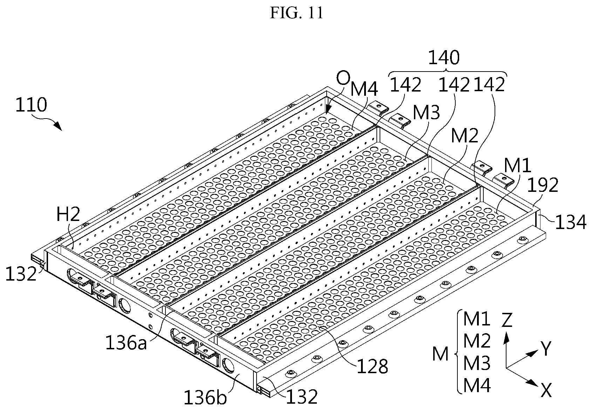

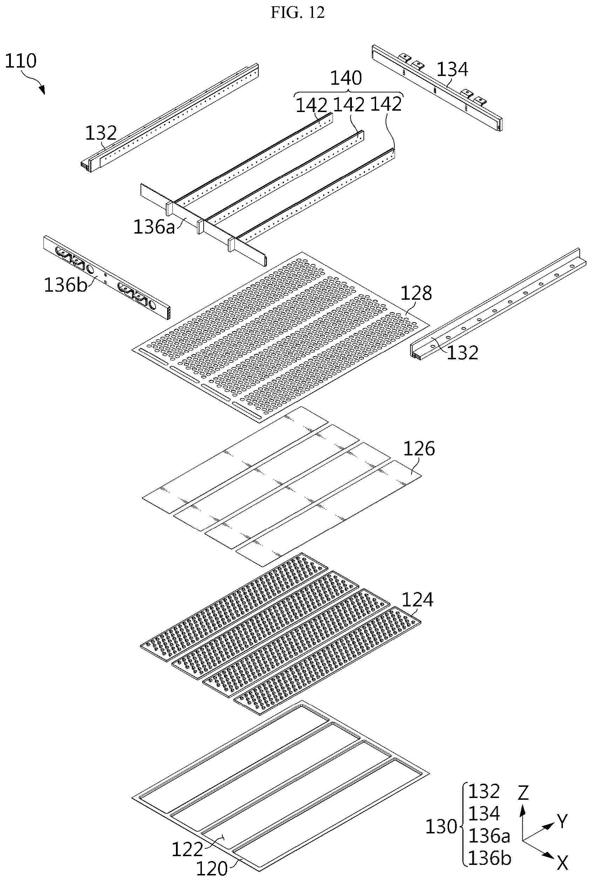

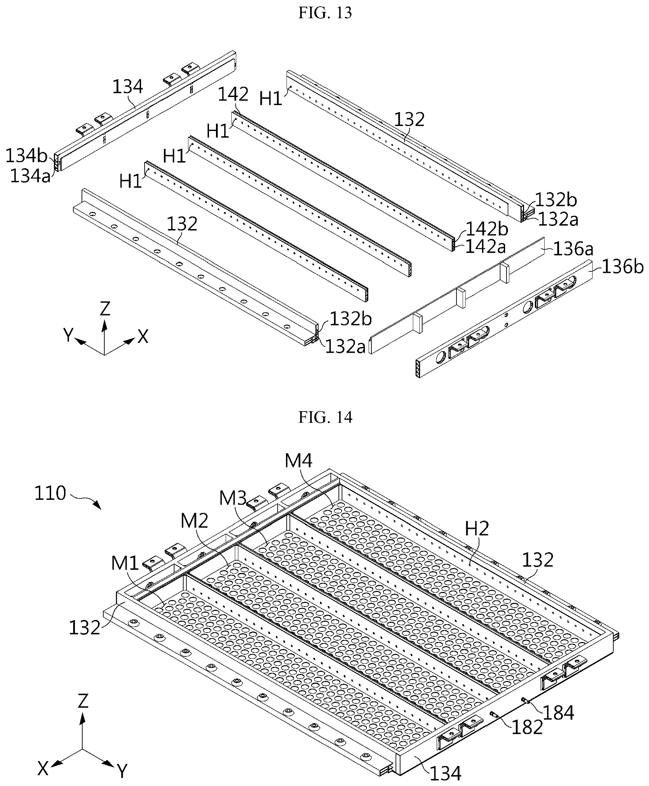

FIG. 8 is a cross-sectional view taken along line I-I' of FIG. 6, and FIG. 9 is a cross-sectional view taken along line II-II' of FIG. 6. FIG. 10 is a view for describing a battery cell assembly included in the battery pack of FIG. 6, and FIG. 11 is a perspective view of a pack housing included in the battery pack of FIG. 6. FIG. 12 is an exploded perspective view of the pack housing shown in FIG. 11. FIG. 13 shows frames of the pack housing shown in FIG. 11. FIG. 14 is a perspective view of the pack housing at a different angle from FIG. 11 to show an inlet port and an outlet port in the battery pack of FIG. 6.

Referring to FIGS. 6 to 14 together, the pack housing 110 is a container accommodating the battery cell assemblies 160 and may be disposed at a predetermined location in a vehicle. In particular, referring to the cross-sections of FIGS. 8 and 9, the internal components of the battery pack 1 may be identified. The detailed structure of the battery cell assemblies 160 may be referred to FIG. 10.

The pack housing 110 may be configured to include a bottom plate 120, an outer frame 130, and a partition frame 140. The pack housing 110 accommodates the battery cell assembly 160 and has a top opening O, particularly referring to FIG. 11. The pack housing 110 has an open top surface and provides an internal space. The top frame 190 may be coupled to the top surface of the pack housing 110. For example, the bottom surface of the top frame 190 may be coupled to the top surface of the outer frame 130 through an adhesive 192. As shown in FIG. 7 and FIG. 11, the adhesive 192 may be positioned on the top surface of the outer frame 130 along the edge-shaped outer frame 130 and may maintain the sealability of the battery pack 1.

The battery pack 100 may further include an electrical component assembly. The electrical component assembly may include, for example, a relay device, a current sensor, a fuse, a battery management system (BMS), a manual service disconnector (MSD), and the like (not shown). The relay device is a switching component that selectively opens and closes a charging and discharging path through which current flows, and may block the flow of charging and discharging current when an abnormal situation occurs in the battery pack 100. As shown in FIGS. 6 and 7, this embodiment illustrates that a relay box 180 including a relay device is positioned on the top frame 190, and the relay box 180 is packaged by a separate relay device cover 195.

The BMS refers to a battery management device that provides overall control of the charging and discharging operation of the battery cell assembly 160, and may be a component typically included in the battery pack 100. The BMS estimates the state of battery cells within the battery pack 100 and manages the battery pack 100 using the estimated state information. For example, the BMS estimates and manages the battery pack 100 state information such as the state of charge (SOC), state of health (SOH), maximum input/output power allowance, and output voltage of the battery pack 100. And, using this state information, it is possible to control the charging or discharging of the battery pack 100, and furthermore, even to estimate the replacement time of the battery pack 100. The BMS manages and monitors the state of the battery cells, such as voltage, current, and temperature, and maintains the battery pack 100 in an optimal state based on this. That is, the BMS efficiently manages the battery pack 100 of an electric vehicle to ensure that the electric vehicle may drive stably, predicts the replacement time of the battery pack 100, and detects abnormal conditions of the battery pack 100 in advance to control it so that vehicle accidents are constrained. And, the MSD is a system for selectively cutting off the power of a high-voltage battery by a physical method, and is a component that cuts off the power by disconnecting the service plug when necessary. This electrical component assembly may be packaged so as not to be exposed to the outside by the pack housing 110 and the top frame 190.

Referring mainly to FIG. 10, the battery cell assembly 160 may include a plurality of battery cells 162. The battery cells 162 may be a plurality of cylindrical secondary batteries that are arrayed along a column (Y direction) and a row (X direction) and stand upright in the vertical direction (Z direction). An electrode assembly is accommodated inside a battery case 162a of the battery cell 162. The battery case 162a is formed in a cylindrical shape, and the electrode assembly may be formed in a jelly roll type in which a positive electrode plate, a negative electrode plate, and a separator interposed between the positive electrode plate and the negative electrode plate are wound in one direction, and a center hole is formed. The battery case 162a may be electrically connected to the negative electrode plate of the electrode assembly. Accordingly, the battery case 162a may have the same polarity as the negative electrode plate, that is, a negative electrode. A cell terminal 162b electrically connected to the positive electrode plate of the electrode assembly is derived outside the battery case 162a. The cell terminal 162b has a positive polarity. A vent portion 162c may be provided at the bottom of the battery cell 162. The vent portion 162c may be configured to discharge venting gas. The vent portion 162c may be configured to be ruptured when the internal pressure of the battery case 162a increases above a certain level. For example, the vent portion 162c may be a region structurally weaker than the surrounding region so as to be easily ruptured. Specifically, the vent portion 162c may be, for example, a region having a thinner thickness than the surrounding region. For example, the vent portion 162c may be provided as a roughly circular closed loop or a C-shaped notch as shown. When the internal pressure of the battery cell 162 abnormally rises, the vent portion 162c is ruptured to discharge the internal gas to the outside. If the vent portion 162c is included in the bottom of the battery cell 162 in this way, it may be helpful in guiding the discharge direction of the venting gas toward the bottom of the battery pack 100. This vent portion 162c may be provided near the center of the bottom of the battery cell 162. A plurality of battery cells 162 may be electrically connected to each other. A busbar (not shown) that makes electrical connections between the battery cells 162 at the top of the battery cell 162 may be further included.

The battery cell assembly 160 may be provided in a roughly cuboidal form having a width (X-direction dimension), a length (Y-direction dimension), and a height (Z-direction dimension). The battery cell assembly 160 may be in a form that extends along a front-back direction. That is, the length may be longer than the width. The width also refers to a dimension along the width direction (or left-right direction) of the battery pack 100, and the length refers to a dimension along the longitudinal direction (or front-back direction) of the battery pack 100. The battery cell assembly 160 does not include a separate module case that surrounds and accommodates the entire plurality of battery cells 162, and the battery pack 100 may be implemented as a battery pack in the form of a cell to pack.

As shown in FIG. 10, the battery cell assembly 160 may include a holder 164, a middle frame 166, and an adhesive member 165 to maintain a dense arrangement of battery cells 162. Each detailed configuration will be described later.

As shown in detail in FIG. 12, the bottom plate 120 provides a space in which the battery cell assembly 160 is placed, may be configured in the form of a flat plate having a roughly large area, and may be positioned at the bottom of the battery cell assembly 160 to support and cover the bottom of each battery cell assembly 160. In particular, the bottom plate 120 may have a press-molded groove portion 122 to allow each battery cell assembly 160 to be seated thereon. The groove portion 122 may be in a form that extends in a front-back direction to conform to the shape of the battery cell assembly 160.

Referring to FIGS. 8, 9, 11 to 14, the outer frame 130 and the partition frame 140 are vertically coupled to the bottom plate 120 and may also be coupled to each other. Each of the outer frame 130 and the partition frame 140 may be an extruded structure of metal. In particular, at least a portion of the outer frame 130 and the partition frame 140 may be a hollow square pipe manufactured by extruding a metal such as aluminum with a hollow space and ribs mixed therein. The frames 130, 140 may be welded and/or bolted to the bottom plate 120 to form the pack housing 110, preferably assembled by welding. The frames 130, 140 may be welded and/or bolted to the bottom plate 120 to form the pack housing 110.

At least a portion of the outer frame 130 and the partition frame 140 may preferably be aluminum hollow square pipes. By manufacturing the outer frame 130 and the partition frame 140 with aluminum hollow square pipes and welding them together to form the pack housing 110, the weight of the pack housing 110 may be reduced and the mechanical rigidity may be maintained at a reliable level or higher. Additionally, the hollows within the square pipes may be intended to reduce the weight of the frames 130, 140 and simultaneously may serve as a passage for cooling fluid capable of cooling the battery cell assembly 160 inside the battery pack 100. The passage for the cooling fluid, that is, the flow path, may be configured by connecting the hollows of the frames 130, 140, and the flow path may have a structure of at least two layers stacked in the vertical direction. In the illustrated example, the hollows of the frames 130, 140 are formed in four layers, of which the middle two layers may be used as flow paths. An inlet port 182 and an outlet port 184 may communicate with each other in the flow path.

The outer frame 130 may be composed of a pair of side frames 132 disposed respectively on both sides in a left-right direction (X direction) on the bottom plate 120, and a front frame 134 and a rear frame 136 disposed respectively on both sides in a front-back direction (Y direction). The outer frame 130 is vertically coupled along the perimeter of the edge of the bottom plate 120 to form a wall. In the pack housing 110, the front frame 134 may form a front wall, the rear frames 136a, 136b may form a rear wall, and the side frame 132 may form a left side wall and a right side wall, respectively.

The partition frame 140 divides an internal space formed by the bottom plate 120 and the outer frame 130, that is, an internal space defined in a box form by the bottom plate 120 and the outer frame 130, into a plurality of ones. In this embodiment, the partition frame 140 includes three cross frames 142.

The battery cell assembly 160 may be positioned so that its longitudinal direction is along a front-back direction of the battery pack 100. Then, the side frame 132 and the cross frame 142 extend along the longitudinal direction of the battery cell assembly 160. The front frame 134 and the rear frames 136a, 136b extend along the width direction of the battery cell assembly 160.

The internal space of the pack housing 110 is divided into a plurality of cell array spaces M by the partition frame 140, that is, the cross frame 142. The battery cell assembly 160 may be individually seated in each corresponding zone. In particular, as shown in FIG. 11, in an embodiment of the present disclosure, the cell array space M may be defined, from right to left, as a first zone M1, a second zone M2, a third zone M3, and a fourth zone M4, respectively.

Four battery cell assemblies 160 are accommodated side by side in a left-right direction. The longitudinal side of the battery cell assembly 160 seated in the first zone M1 faces the inner side of the right side frame 132 and the right side of the right cross frame 142. The longitudinal side of the battery cell assembly 160 seated in the second zone M2 faces the left side of the right cross frame 142 and the right side of the cross frame 142 located in the center. The longitudinal side of the battery cell assembly 160 seated in the third zone M3 faces the left side of the cross frame 142 located in the center and the right side of the left cross frame 142. The longitudinal side of the battery cell assembly 160 seated in the fourth zone M4 faces the left side of the left cross frame 142 and the right side of the left side frame 132. Additionally, the widthwise side of each battery cell assembly 160 faces the inner side of the front frame 134 and the inner side of the rear frames 136a, 136b.

Referring mainly to FIGS. 8, 9, and 13, it is exemplified that a flow path through which cooling fluid may flow is provided inside the side frame 132 and the front frame 134 of the outer frame 130, and a flow path through which cooling fluid may flow is provided inside the cross frame 142. In this embodiment, the side frame 132, the front frame 134, and the cross frame 142 are formed in the form of a hollow square pipe, and one or more ribs dividing the internal space into upper and lower parts are provided in the height direction to allow the hollow internal space to be partitioned into a plurality of parts in the height direction, so that there is provided a multilayer structure in which flow paths 132a, 132b are stacked in the height direction in the side frame 132, flow paths 134a, 134b are stacked in the height direction in the front frame 134, and flow paths 142a, 142b are stacked in the height direction in the cross frame 142.

When flow paths are provided in the outer frame 130 or the partition frame 140 in this way, these flow paths may communicate with each other. The flow paths may be configured such that the lower-layer hollows, that is, the flow paths 132a, 134a, 142a of the lower space, communicate with each other, and the upper-layer hollows, that is, the flow paths 132b, 134b, 142b of the upper space, communicate with each other. In this way, it is possible to implement a flow path structure in which the cooling fluid may move by using aluminum hollow square pipes in the frames 130, 140. A thermal runaway in which a fire breaks out in a battery cell due to overcharge or the like may occur, but in order to prevent the occurrence of such a thermal runaway situation, the present disclosure proposes a configuration in which cooling fluid paths are provided inside the outer frame 130 and the partition frame 140 constituting the pack housing 110 to cool the battery cell 162 by directly supplying the cooling fluid into the battery pack 100, so that the cooling fluid may be circulated through the flow paths to discharge the heat of the battery cell 162 to the outside. By eliminating a separate heat sink and related parts, cost savings and improved energy density may be realized.

This cooling fluid may be introduced toward the battery cells 162 to directly cool the battery cells 162. As the cooling fluid, both general cooling water for vehicles and insulating oil may be used. That is, the cooling fluid may be a cooling fluid such as water or insulating oil.

When the outer frame 130 and the partition frame 140 are manufactured into hollow square pipes and then welded so that at least some of the hollows may communicate with each other as intended, the temperature of the battery cell assembly 160 may be lowered by allowing cooling fluid to enter/circulate through the hollows along an intended path to absorb and discharge heat generated in the battery cell assembly 160. In particular, when at least some of the hollows communicate with each other, a cooling fluid passage through which cooling fluid is supplied to the battery cell assembly 160 over a short distance and recovered over a short distance may be formed.

For welding between components constituting the pack housing 110, FWS, MIG, remote laser welding, and the like may be appropriately applied depending on the type, structure, and location of the components. For example, the outer frame 130 and the partition frame 140 are MIG welded to form a frame assembly, and the bottom plate 120 is assembled on the bottom surface of the frame assembly by FSW. The outer frame 130 and the partition frame 140 may be provided as hollow square pipes and appropriately welded together to allow the layers inside the square pipes to communicate in all directions, and only some sections may be allowed to communicate to form a flow path, as necessary. Through the welding, the pack housing 110 achieves the basic skeletal structure of the cell to pack type battery pack 100, and constitutes a sealed system even when a flow path is provided.

Since the pack housing 110 provides mechanical support for the battery cell assembly 160 and the electrical component assembly and serves to protect them from external impacts or the like, it is preferable to manufacture the pack housing 110 with a metal material having high rigidity. It may be preferable for the entire pack housing 110 to be made of a metal material having high mechanical rigidity. For example, the outer frame 130 and the partition frame 140 may be made of aluminum, and the bottom plate 120 may be made of aluminum or steel. Referring to FIG. 12, a plastic supporter 124 and a GF sheet 126 may be further included on the groove portion 122 of the bottom plate 120 to provide insulation to the bottom plate 120. Additionally, a cell supporter 128 may be provided on the bottom plate 120 to support all the battery cell assemblies 160 at once. The battery cell assemblies 160 may be seated on the cell supporter 128, and a plurality of venting holes may be formed on the cell supporter 128 at a position facing the vent portion 162c. The GF sheet 126 covers these venting holes and may be opened by venting gas. The GF sheet 126 may be positioned between the cell supporter 128 and the battery cell assembly 160, or between the cell supporter 128 and the plastic supporter 124.

Referring to FIG. 10 again for a detailed configuration of the battery cell assembly 160, the lower portion of the battery cell 162 is accommodated in a holder 164. The holder 164 extends in a front-back direction to conform to the shape of the battery cell assembly 160. The holder 164 is formed to have a structure where the lower portion of the battery cell 162 is inserted. The holder 164 includes a plurality of receiving grooves 164a that accommodate the battery cells 162, respectively. The depth of the receiving grooves 164a is a depth where a portion of the height of the battery cell 162 is inserted, and the receiving groove 164a and the battery cell 162 may be fixed using an adhesive member 165. In particular, the adhesive member 165 is a waterproof/structural adhesive. For example, it may be an epoxy-based waterproof resin. As such, the adhesive member 165 may fix the holder 164 and the battery cell 162.

The receiving grooves 164a are disposed side by side with each other so that the battery cells 162 are inserted into each. The receiving grooves 164a are shaped to follow the outer circumferential surface of the battery cell 162, which is cylindrical. Therefore, the receiving groove 164a is also cylindrical. The receiving groove 164a may support the side and bottom surfaces of the battery cell 162 at the bottom of the battery cell 162. The receiving grooves 164a may accommodate the battery cells 162 separately. When the battery cell 162 is inserted and accommodated in the receiving groove 164a in an upright state, movement in the up, down, left, and right directions may be prevented. The holder 164 not only serves to seat the battery cell 162 and fix the basic position of the battery cell assembly 160, but may also serve to block flames to surrounding battery cells when the battery cell 162 is ignited. The holder 164 may include a spacer 164b configured to be provided between the receiving grooves 164a and to maintain spacing between the battery cells 162. The spacer 164b may be provided in a form that protrudes upward from the holder body 164. The spacer 164b may be configured to maintain spacing between the battery cells 162. Additionally, the spacer 164b may be configured to guide the insertion of the battery cell 162 into the receiving groove 164a when the battery cells 162 are assembled.

The adhesive member 165 may be filled between the battery cells 162 to fix the battery cells 162 to each other. At this time, the adhesive member 165 may be interposed between the battery cell 162 and the spacer 164b. In particular, the adhesive member 165 may prevent the cooling fluid from leaking to the lower side of the battery cell assembly 160. Additionally, the adhesive member 165 may increase the heat dissipation efficiency of the battery cell 162, which may further increase the cooling performance of the battery cell 162. The adhesive member 165 may be provided with any material capable of improving the fixation and heat dissipation efficiency of the battery cell 162. As a result, chain ignition may be prevented when a thermal event situation occurs due to an abnormality in the battery cell 162. Additionally, the adhesive member 165 may also perform an insulating role to prevent current flow toward the adjacent battery cell 162 when at least one particular battery cell 162 of the plurality of battery cells 162 is broken due to an abnormal situation. The adhesive member 165 may be applied to the side of the battery cell 162 and may also be applied to the vent portion 162c to prevent the vent portion 162c from being exposed. Therefore, even if there is thermal runaway due to an abnormality in any one battery cell 162, flames are not transmitted to the surrounding battery cells 162, thereby being not vulnerable to chain ignition.

The spacer 164b may include a part whose thickness becomes narrower as it goes in one direction. A part where the gap between the battery cell 162 and the spacer 164b becomes wider as it goes in one direction may be provided. For example, the spacer 164b may include a part whose thickness becomes thinner as it goes upward. In this case, the lower portion of the spacer 164b is in almost contact with the battery cell 162, and the spacer 164b may be configured such that the distance from the battery cell 162 increases as it goes upward. According to the above embodiment of the present disclosure, the adhesive member 165 may be guided to be accommodated in the space between the spacer 164b and the battery cell 162. Accordingly, the space between the spacer 164b and the battery cell 162 may be more reliably sealed, thereby more effectively preventing the cooling fluid from leaking to the outside.

The adhesive member 165 may stably fix the battery cell 162 and improve waterproof performance as well. The structure of the holder 164 as described above ensures that the adhesive member 165 and the battery cell 162 have a sufficient contact area on the surface where they are in contact.

The middle frame 166 also extends in a front-back direction to conform to the shape of the battery cell assembly 160. The middle frame 166 supports a portion of the battery cell 162. The middle frame 166 supports a position that is higher than the position supported by the holder 164 in the battery cell 162. Here, each of the battery cells 162 may be inserted into and supported by the middle frame 166.

The holder 164 and the middle frame 166 may hold the battery cells 162 in a mass, which may be maintained in a single unit state. 2The holder 164 and the middle frame 166 may be a composite material such as FRP that satisfies all the conditions of electrical insulation, mechanical rigidity, and light weight. Preferably, the holder 164 and the middle frame 166 are materials that may be formed by plastic injection.

The middle frame 166 may maintain a gap between the battery cells 162 at the top of the battery cell 162. A through hole 166a through which each battery cell 162 passes may be formed in the middle frame 166. The upper portion of the battery cell 162 may be inserted into the through hole 166a. In this embodiment, since the battery cell 162 is a cylindrical secondary battery, the through hole 166a of the middle frame 166 is circular.

A cooling flow path space that allows cooling fluid to be filled between the battery cells 162 is formed between the holder 164 and the middle frame 166. Referring to FIGS. 7 to 9, the filling member 170 seals the top opening O of the bottom plate 120. As clearly shown in the cross-sections of FIGS. 8 and 9, the middle frame 166 prevents the filling member 170 filled above the middle frame 166 from penetrating toward the cooling flow path space. The middle frame 166 isolates the cooling fluid filled in the cooling flow path space from the filling member 170. The middle frame 166 blocks the filling member 170 in the Z direction. The filling member 170 is provided on the upper side of the middle frame 166 to prevent leakage of the cooling fluid. The middle frame 166 is a major component that serves to implement a flow space of the cooling fluid for cooling the battery cell 162 in this manner while preventing the filling member 170 from penetrating into this flow space.

A cooling flow path space may be implemented inside the battery pack 100 so that the side of the battery cell 162 is exposed, and the cooling fluid may be filled in this cooling flow path space to flow and circulate or remain in a filled state. The cooling fluid may fill some or all of the battery cell 162 in the height direction. The cooling fluid may be directly filled between the battery cells 162 in the cooling flow path space between the middle frame 166 and the holder 164. As such, the battery cell 162 may be immersed in the cooling fluid within the battery pack 100. This cooling fluid may serve to prevent the temperature of the battery cell 162 from rising by directly cooling the battery cell 162, and has excellent cooling performance.

The cooling fluid may flow between the middle frame 166 and the holder 164. The cooling fluid may be in direct contact with the battery cell 162. Additionally, the cooling fluid may directly exchange heat with the battery cell 162.

According to the above embodiment of the present disclosure, the cooling performance of the battery cell 162 may be improved due to the direct cooling method. Furthermore, even if the problematic battery cell 162 is ignited and the temperature rises, the cooling fluid inside the battery pack 100 may be maintained while heat is continuously transferred from the ignited battery cell 162 to cool the corresponding battery cell 162, thereby protecting the surrounding battery cells 162 from temperature rise.

The filling member 170 on the upper side of the middle frame 166 is provided to prevent leakage of the cooling fluid. The filling member 170 may be provided with a potting resin. Here, potting means a method of injecting and applying a liquid resin to the upper side of the middle frame 166, and then curing and packaging it. The filling member 170 may be a foam. The filling member 170 is a waterproof component implementing a seal so that the cooling fluid does not leak out of the battery pack 100. Therefore, the potting resin may be a potting resin having waterproof performance. The filling member 170 is filled into the pack housing 110 above the middle frame 166 to seal the top opening O. The filling member 170 may be formed by seating the battery cell assembly 160 on the bottom plate 120, injecting and applying a liquid resin through the top opening O, and then curing it.

As described above, according to the present disclosure, by implementing a waterproof structure through a filling member 170 such as a potting resin, a silicone rubber double injection structure or a waterproof foam tape is not required, so that the number of parts is reduced and the assembly process is simplified. This enables cost savings. The battery pack 100 is a battery pack that has a simplified structure in the form of a cell to pack, may implement a waterproof sealing structure by the filling member 170, and has an improved cooling efficiency by applying an immersion cooling method.

Since the waterproof structure through the filling member 170 of the present disclosure only requires filling the top opening O above the middle frame 166, it does not implement waterproof performance by inserting a separate member between parts that need to be sealed and applying pressure by a separate fixing member. There is no need at all for a waterproof foam tape, sealant, silicone rubber material parts such as O-ring, bolting structure, and the like. Therefore, the manufacturing process of the battery pack 100 is very simple and the cost is reduced.

Meanwhile, the battery pack 100 is sealed by the filling member 170, so that the battery pack 100 itself may form a closed system. The middle frame 166 may act as a guide for maintaining the gap between the battery cells 162 while being assembled with the battery cells 162 to maintain the gap between the cells, which is important in the direct cooling structure, at a constant level, thereby serving to form a uniform cooling flow path space and reduce the differential pressure of the cooling fluid between the battery cell assemblies 160. In addition, after the filling member 170 is applied and cured, it is an important configuration for making the battery pack 100 a closed system so that the filling member 170 does not flow into the cooling flow path space.

The filling member 170 is a waterproof component that seals the top opening O, and at the same time, it may more stably fix the upper end of the battery cell 162 protruding upward through the through hole 166a of the middle frame 166 and may also increase the heat dissipation efficiency of the battery cell 162, thereby further increasing the cooling performance of the battery cell 162.

For example, the filling member 170 is a potting resin, and may be provided by mixing with beads such as glass bubbles. The potting resin may be formed by injecting a resin material in a dilute liquid state into the battery cell 162 and curing it. Here, the injection of the resin material may be performed at a room temperature of about 15 °C to 25 °C to prevent thermal damage to the battery cell 162. The curing may then be performed at a higher temperature.

In addition, the filling member 170 may prevent infiltration of moisture or foreign substances into the battery cell 162, prevent chain ignition in the event of a thermal event due to an abnormality in the battery cell 162, and further increase the structural rigidity of the battery pack 100.

Specifically, the filling member 170 may include silicone resin. The present disclosure is not limited thereto, and it is obvious that the filling member 170 may be made of other resin materials capable of improving the fixation and heat dissipation efficiency of the battery cell 162 and implementing waterproof performance in addition to the silicone resin.

The filling member 170 may have a predetermined viscosity and include at least two materials. Specifically, the filling member 170 may be provided by mixing a predetermined resin and beads at a preset ratio. The filling member 170 may reduce the cost of the potting resin by mixing the beads, and the properties of the filling member 170, such as viscosity, may be adjusted according to the mixing ratio.

This filling member 170 may guide the thermal equilibrium of the battery cell 162, thereby preventing cooling deviation of the battery cell 162 to prevent local deterioration of the battery cell 162. Additionally, the safety of the battery pack 100 may also be significantly improved by preventing local deterioration of the battery cell 162.

Additionally, the filling member 170 may perform an insulating role to prevent current flow toward the adjacent battery cells 162 in the event of breakage or the like due to an abnormal situation in at least one particular battery cell 162 of the battery cells 162.

Additionally, the filling member 170 may be made of a material having high specific heat performance or may further include such a material. Accordingly, the filling member 170 may increase the thermal mass to delay the temperature rise of the battery cell 162 even in situations such as rapid charging and discharging of the battery cell 162, thereby preventing a rapid temperature rise of the battery cell 162.

Additionally, the filling member 170 may be made of a material having high heat resistance performance or may further include such a material. Accordingly, the filling member 170 may effectively prevent thermal runaway propagation toward other adjacent battery cells 162 in the event of a thermal event due to overheating or the like in a particular battery cell 162.

Additionally, the filling member 170 may be made of a material having high flame retardancy or may further include such a material. Accordingly, the filling member 170 may minimize the risk of fire in the event of a thermal event due to overheating or the like in a particular battery cell 162.

As such, the filling member 170 may be a flame retardant/waterproof/adhesive potting resin. According to the present disclosure, by applying such a filling member 170, a waterproof structure may be easily and simply implemented even if the battery pack 100 has a large area. In particular, according to the present disclosure, the top potting method is applied, and thus a very simple waterproof sealing is implemented without the need for other waterproof parts. Therefore, since the structure of the battery pack 100 in the form of a cell to pack may be simplified, a direct cooling type battery pack 100 with a simplified assembly and manufacturing process may be obtained. Furthermore, since the number of parts is not large, it is not sensitive to foreign substances or the like during the assembly and manufacturing process, and the factors causing defects may be reduced and manufacturing cost may be reduced.

Referring to FIGS. 11, 12, and 14, the battery cell assembly 160 described above is placed on the cell supporter 128. An adhesive member may be applied to fix the battery cell assembly 160. In particular, the adhesive member may be a waterproof/structural adhesive.

In the cell array space M, the gas or flame generated in any one battery cell 162 is blocked by the cross frame 142 from spreading to the side inside the battery pack 100. Additionally, the gas or flame is blocked by the filling member 170 from spreading upward inside the battery pack 100.

The space between the cell supporter 128 and the groove portion 122 may be utilized as a venting flow path. The plastic supporter 124 may define the venting flow path. The structure of the venting flow path may be identified in the cross-section in FIGS. 8 and 9. In this way, the bottom plate 120 implements a battery cell seating portion support structure while also implementing a flame flow path. The venting flow path may provide a predetermined space in which gas or flame flows at the lower side of the battery cell assembly 160. While preventing the gas discharged from the battery cell 162 from spreading in all directions, the venting gas is induced to move in a designated direction, that is, along the venting flow path, and thus safety may be secured.

When the vent portion 162c is opened due to an abnormality in a particular battery cell 162, gas or flame may be normally discharged downward. The gas or flame may be discharged downward by penetrating the GF sheet 126. The discharged gas or flame may move along the venting flow path defined by the plastic supporter 124 within the groove portion 122 and be discharged to the outside of the battery pack 100 through a venting device (not shown) that may be provided in the pack housing 110.

As such, when a thermal event occurs in any battery cell 162 and high-temperature gas or flames are generated, the battery pack 100 may induce the gas or flames in a specific direction through the venting flow path within the cell array space M rather than in all directions to discharge them to the outside of the pack housing 110, and in the process of discharging the gas or flames to the outside of the pack housing 110, other battery cells 162 included in other battery cell assemblies 160 may be prevented from receiving thermal damage as possible as they can.

Additionally, according to the present disclosure, the venting flow path is located on the bottom the battery pack 100 rather than on the top, and thus, when high-temperature gas or flames are discharged from the battery cell 162 in a situation such as thermal runaway, the discharged gas or flames may not be directed upward. In particular, in a case where a passenger is located above the battery pack 100, such as in an electric vehicle, the gas or flames may be suppressed or delayed from being directed toward the passenger according to the above embodiment. In particular, according to this embodiment of the present disclosure, directional venting may be performed to the bottom of the battery pack 100 and to the side connected thereto, thereby improving the safety of users located on the upper side, such as the passenger.

The battery pack 100 is a direct immersion cooling battery pack with excellent cooling performance. Since the battery pack 100 has excellent cooling performance compared to a conventional heat sink method, it may solve heat generation problem, particularly, the heat generation problem due to the rapid charging requirements. The battery pack 100 may secure competitiveness by providing a differentiated solution to solve the heat generation problem due to the rapid charging requirements of customers.

As such, the present disclosure may provide a simple and compact battery cell assembly 160 without complicating the overall structure and taking up much space, and the battery cell assembly 160 may be integrated and manufactured into a cell to pack type battery pack 100, and by using the direct cooling method, the occurrence of temperature deviations between one end and the other end of the battery cell 162 may be suppressed. In addition, gas or flame may be safely discharged to the outside of the pack housing 110 along a designated venting flow path. Additionally, a vehicle including this battery pack 100 may be provided. A vehicle including this battery pack 100 may have improved safety and durability.

Referring to FIGS. 10 to 14 to further describe the direct cooling method, in each cell array space M, the longitudinal side of the battery cell assembly 160 faces the side frame 132 and the cross frame 142. In the cell array space M, the widthwise side of the battery cell assembly 160 faces the front frame 134 and the rear frames 136a, 136b. In the frames 130, 140 surrounding each cell array space M, distribution holes H1 and recovery holes H2 for communicating each cell array space M with flow paths 132a, 132b, 134a, 134b, 142a, 142b may be formed. The positions of the distribution holes H1 and the recovery holes H2 may be identified in FIGS. 11, 13, and 14.

A flow path through which cooling fluid may flow is provided inside the outer frame 130 and the partition frame 140, and flow paths 132a, 132b are provided in the side frame 132, flow paths 134a, 134b are provided in the front frame 134, and flow paths 142a, 142b are provided in the cross frame 142. When flow paths are provided in the outer frame 130 or the partition frame 140, these flow paths may communicate with each other. In this embodiment, the side frame 132, the front frame 134, and the cross frame 142 are formed in the form of a hollow square pipe, and one or more ribs dividing the internal space into upper and lower parts are provided in the height direction to allow the hollow internal space to be partitioned into a plurality of parts in the height direction, so that there is provided a multilayer structure in which flow paths 132a, 132b are stacked in the height direction in the side frame 132, flow paths 134a, 134b are stacked in the height direction in the front frame 134, and flow paths 142a, 142b are stacked in the height direction in the cross frame 142. The flow paths may be configured such that the lower-layer hollows, that is, the flow paths 132a, 134a, 142a of the lower space, communicate with each other, and the upper-layer hollows, that is, the flow paths 132b, 134b, 142b of the upper space, communicate with each other. In this way, it is possible to implement a flow path structure in which the cooling fluid may circulate and move throughout the battery pack 100 by using aluminum hollow square pipes in the frames 130, 140. By eliminating a separate heat sink and related parts, cost savings and improved energy density may be realized.

In this embodiment, the distribution hole H1 may be formed at a position that communicates each cell array space M with the upper-layer flow paths 132b, 134b, 142b. The recovery hole H2 may be formed at a position that communicates each cell array space M with the lower-layer flow paths 132a, 134a, 142a. Additionally, the distribution hole H1 and the recovery hole H2 may be formed at opposite sides.

The battery pack 100 further includes an inlet port 182 for introducing cooling fluid and an outlet port 184 for discharging cooling fluid. In this embodiment, the inlet port 182 is provided in the front frame 134 at a position communicating with the upper-layer flow paths 132b, 134b, 142b. The outlet port 184 is provided in the front frame 134 at a position communicating with the lower-layer flow paths 132a, 134a, 142a. The inlet port 182 and the outlet port 184 may be provided at approximately the center of the front frame 134 to uniformly distribute and recover the cooling fluid. As another example, the inlet port 182 may be provided at the left end or the right end of the upper-layer flow path 134b of the front frame 134, and the outlet port 184 may be provided at the end of the lower-layer flow path 134a below the inlet port 182. As still another example, the inlet port 182 may be provided at the left end of the upper-layer flow path 134b of the front frame 134, and the outlet port 184 may be provided at the right end of the lower-layer flow path 134a. A waterproof part such as an O-ring may be interposed between the inlet port 182 and the outlet port 184 and the assembly surface of the front frame 134.

If the cooling fluid circulation flow path is long, the ΔT difference between the inlet port 182 and the outlet port 184 may be large. If the temperature deviation between the battery cells is excessive or sustained for a long time, there is a concern that lithium precipitation of the battery cells and a decrease in the battery cell life may occur. Since deteriorated battery cells are more likely to generate TR and TP than non-deteriorated battery cells in the event of the occurrence of an abnormality, it is necessary to prevent deterioration.

According to the present disclosure, a cooling flow path where the cooling fluid circulates over the shortest distance inside the battery pack 100 without a separate heat sink is configured. In the present disclosure, an immersion cooling method in which the cooling fluid directly circulates inside the battery pack 100 through a passage of an aluminum hollow square pipe is implemented.

The flow paths 132b, 134b, 142b for introducing the cooling fluid and the flow paths 132a, 134a, 142a for recovering the cooling fluid may be configured in a vertically stacked form inside the frames 130, 140, and the distribution hole H1 may be formed on a side facing the longitudinal side of the battery cell assembly 160 in the frames 130, 140 while communicating with the flow paths 132b, 134b, 142b for introducing the cooling fluid inside the frames 130, 140, thereby allowing the cooling fluid to be introduced toward the battery cell assembly 160 along the width direction, which is a shorter distance between the longitudinal direction and the width direction. With respect to the battery cell assembly 160, the cooling fluid flows for a short distance along the width direction and is then recovered directly through the recovery hole H2 that communicates with the flow paths 132a, 134a, 142a for recovering the cooling fluid inside the frames 130, 140 and is formed on a side facing the longitudinal other side of the battery cell assembly 160 in the frames 130, 140.

In each cell array space M, the side of the battery cell assembly 160 is surrounded by the outer frame 130 and the partition frame 140. The holes H1, H2 are disposed to correspond to each battery cell assembly 160 in the frames 130, 140 surrounding each cell array space M. The cooling fluid introduced from the inlet port 182 is distributed almost similarly to all the battery cell assemblies 160 through the upper space flow paths 132b, 134b, 142b and flows at a similar flow distance in each cell array space M, and then may be recovered and discharged along an independent discharge path through the lower space flow paths 132a, 134a, 142a. By using the filling member 170 and the adhesive member, the cooling fluid cooling any one battery cell assembly 160 and the cooling fluid cooling the other battery cell assembly 160 may be configured to circulate along independent flow paths without mixing and affecting each other.

As such, according to the present disclosure, it may be configured to use cooling water or insulating oil that is circulated through a cooling system of a vehicle while maintaining sealability so that the cooling water or insulating oil does not leak. It is possible to directly cool the battery cell, to improve the cooling performance of the battery cell through uniform distribution and rapid recovery of the cooling fluid, and short-range flow, and to uniformly cool each battery cell regardless of the position of the battery cell within the battery pack. Accordingly, deviations of heating temperature may be minimized. Therefore, the cooling efficiency may be further improved by minimizing temperature deviations between each battery cell.

Referring to FIGS. 13 and 14, in this embodiment, cooling fluid is introduced into the frames 130, 140, particularly into the upper-layer flow path 134b of the front frame 134, through the inlet port 182. The cooling fluid flows along the flow path 134b and is distributed to other upper-layer flow paths 132b, 142b communicating with the flow path 134b. The cooling fluid introduced into the upper-layer flow paths 132b, 142b moves along the flow paths 132b, 142b and directly flows into the battery pack 100 from the longitudinal side of the battery cell assembly 160 through the distribution hole H1 communicating therewith. The introduced cooling fluid cools the battery cell 162 along the width direction of the battery cell assembly 160 and then flows into the recovery hole H2. The recovery hole H2 communicates with the lower-layer flow paths 132a, 142a. The cooling fluid entering the recovery hole H2 flows along the lower-layer flow paths 132a, 142a and then flows into another lower-layer flow path 134a communicating therewith. An outlet port 184 is provided here, so that the cooling fluid moving along the flow path 134a may be discharged to the outside of the battery pack 100 through the outlet port 184. By placing the distribution hole H1 and the recovery hole H2 at a position facing the longitudinal side of the battery cell assembly 160 in this way, the cooling fluid may meet the battery cell 162 over a short distance, and the cooling fluid heated by taking heat from the battery cell 162 may be quickly recovered. That is, according to the present disclosure, the cooling fluid may be moved over a short distance to maximize cooling efficiency.

To recap, the cooling fluid introduced into the inlet port 182 moves through the upper-layer flow path 134b of the front frame 134, and moves through the upper-layer flow path 132b of the side frame 132 and the upper-layer flow path 142b of the cross frame 142 located inside the battery pack 100. In this embodiment, it moves to the side where the rear frames 136a, 136b are located. The cooling fluid is distributed to the first zone M1, the second zone M2, the third zone M3, and the fourth zone M4 through the distribution holes H1 that are opened inwardly toward the battery cell assembly 160 in the side frame 132 and the cross frame 142. It is distributed over a short distance in the width direction.

The cooling fluid distributed to the first zone M1 moves to the lower-layer flow path 142a of the right cross frame 142 through the recovery hole H2 formed on the right side of the right cross frame 142 to the opposite side of the inner distribution hole H1 of the right side frame 132. The cooling fluid distributed to the second zone M2 moves to the lower-layer flow path 142a of the middle cross frame 142 through the recovery hole H2 formed on the right side of the middle cross frame 142 to the opposite side of the distribution hole H1 of the right cross frame 142. The cooling fluid distributed to the third zone M3 moves to the lower-layer flow path 142a of the left cross frame 142 through the recovery hole H2 formed on the right side of the left cross frame 142 to the opposite side of the distribution hole H1 of the middle cross frame 142. The cooling fluid distributed to the fourth zone M4 moves to the lower-layer flow path 132a of the left side frame 132 through the recovery hole H2 formed on the right side of the left side frame 132 to the opposite side of the distribution hole H1 of the left cross frame 142. The cooling fluid moved to the lower-layer flow paths 132a, 142a of the side frame 132 and the cross frame 142 may move to the lower-layer flow path 134a of the front frame 134 and be discharged to the outside of the battery pack 100 through the outlet port 184 communicating therewith.

The cooling fluid that cooled each zone M1 to M4 in this way is returned through the recovery hole H2 opened on the inner side the side frame 132 and the cross frame 142, and since the distribution hole H1 and the recovery hole H2 are located in different positions, opposite to each other, and communicating with the flow paths of different layers, there is no concern that the fluid flowing into each zone M1 to M4 and the fluid recovered from each zone M1 to M2 will be mixed inside the battery pack 100.

According to the present disclosure, the cooling fluid is configured to circulate in a unidirectional width direction. The present disclosure implements a unidirectional flow path circulation structure of the battery pack 100 by immersion cooling without a separate heat sink. Compared to the case of circulating the cooling fluid in the longitudinal direction, the thermal resistance deviation between the inlet port 182 and the outlet port 184 may be reduced. Additionally, since it is immersion cooling, the temperature rise of a particular battery cell is suppressed, thereby improving TR/TP reliability.

As such, the present disclosure applies a direct cooling method having excellent cooling heat transfer efficiency. The battery pack 100 of the present disclosure may receive insulating oil and hydraulic pressure from an oil pump of a vehicle equipped with this battery pack 100 or may receive cooling water and pump pressure. The insulating oil or water introduced at high pressure into the inlet port 182 is distributed over a short distance to directly cool the battery cells 162. Regardless of the location of the battery cells 162 within the battery pack 100 or the distance from the inlet port 182, it is possible to minimize temperature deviations by implementing uniform cooling performance between the battery cells 162.

Thereafter, the insulating oil or water accumulated in the battery pack 100 may be discharged and circulated through the outlet port 184. The cooling fluid discharged to the outside may be re-cooled and circulated through a cooling system of a vehicle and then introduced back to the outside of the battery pack 100. The circulation of the cooling fluid may be achieved by using the pump pressure of a pump or the like used in the cooling system of a vehicle.

As a result of the test, it was confirmed that the longer the length of the cooling fluid flow path, the more severe the temperature deviation between battery cells. During rapid charging, the more severe the temperature deviation between battery cells due to high power and long-term use, the more abnormal defects occurred.

In the present disclosure, the cooling fluid circulation distance, which is a distance where the cooling fluid is introduced from the inlet port 182 and moves to the outlet port 184, may be implemented as short as possible to uniformly maintain the thermal resistance between battery cells 162, thereby minimizing the temperature deviation between battery cells 162.

As such, according to the present disclosure, there is provided a battery pack 100 that implements a waterproof sealed structure by simplifying the structure in a cell to pack type battery pack 100 and improves cooling efficiency by applying an immersion cooling method. It is possible to configure an efficient cooling flow path in which the cooling fluid circulates throughout the battery pack 100 from the inlet port 182 to the outlet port 184 without a separate heat sink. Assembly complexity/ease of assembly is greatly improved by reducing the number of components required for the cooling line configuration.

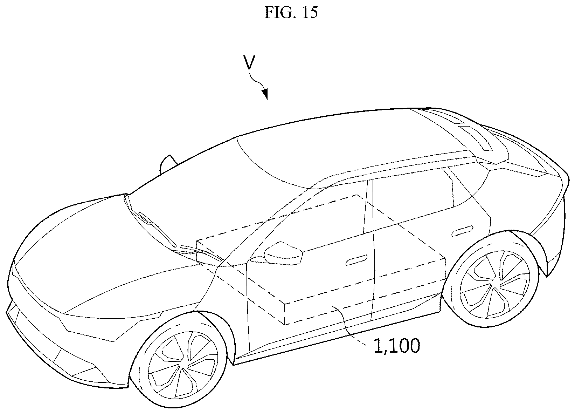

FIG. 15 is a view for describing a vehicle according to an embodiment of the present disclosure.

Meanwhile, the present disclosure may provide a vehicle V including battery packs 1, 100 according to the above-described embodiment. That is, the battery packs 1, 100 according to the present disclosure may be applied to a vehicle such as an electric vehicle or a hybrid vehicle. For example, the battery packs 1, 100 may be installed in a body frame or a trunk space under a vehicle seat. The vehicle V includes a four-wheeled vehicle and a two-wheeled vehicle. The vehicle V operates by receiving power from the battery packs 1, 100 according to an embodiment of the present disclosure.

It is obvious that the battery packs 1, 100 according to the present disclosure may be applied to energy storage systems (ESSs) or various electric devices in addition to vehicles. In this way, devices, apparatuses, and facilities equipped with the battery packs 1, 100, such as the vehicle V according to an embodiment of the present disclosure, include the battery packs 1, 100 described above, and may be implemented with all the advantages due to the battery packs 1, 100 described above.

In other words, the vehicle V includes the battery packs 1, 100, and the battery packs 1, 100 have excellent cooling performance and improved waterproof reliability as described above. Therefore, the vehicle V including the same is safe and easy to operate.

Additionally, the battery pack 100 may efficiently discharge high-temperature gas and flames, which may lengthen the flame movement path to ensure the safety and reliability of the battery pack 100. Therefore, even if a problem occurs in the battery pack 100 when driving the vehicle V, stability is maintained. Additionally, since this battery pack 100 has excellent stability and may be used for a long time, the vehicle V including the same is safe and easy to operate.

As such, the vehicle V including the battery packs 1, 100 of the present disclosure has improved safety and durability.

In particular, since the battery pack 100 may eliminate the risk of occurrence of internal cracks at the interface of the potting resin or the potting resin layer upon vibration/ impact, the waterproof reliability is further improved, and thus this battery pack 100 is very advantageous for application to vehicles V that are frequently exposed to external vibration.

As is well known, an ESS allows renewable energy such as solar and wind power, which are difficult to generate at a desired time, to be stored in advance and used when necessary. To configure a standalone system that stores power of several hundred kWh or more, the battery packs 1, 100 according to the present disclosure may be used for power storage in this ESS. The battery packs 1, 100 according to the present disclosure have excellent cooling performance and reliable waterproof performance as described above, and even if a thermal event occurs in the battery cells 62, 162 and high-temperature gas or flames are generated, they may be quickly discharged to the outside of the pack housings 10, 110. Therefore, even if a problem occurs in some battery packs, ESS stability may be maintained and the spread of fire may be prevented.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

| | | | |
|---|---|---|---|
| 1, 100: | battery pack | 10, 110: | pack housing |
| 20, 120: | bottom plate | 122: | groove portion |
| 124: | plastic supporter | 126: | GF sheet |
| 128: | cell supporter | 30, 130: | outer frame |
| 32, 132: | side frame | | |
| 32a, 32b, 34a, 34b, 42a, 42b, 132a, 132b, 134a, 134b, 142a, 142b: | flow path | | |
| 34, 134: | front frame | 36, 136a, 136b: | rear frame |
| 40, 140: | partition frame | 42: | cross frame |
| 44: | center frame | 60, 160: | battery cell assembly |
| 62, 162: | battery cell | 164: | holder |
| 165: | adhesive member | 170: | filing member |
| 180: | relay box | 82, 182: | inlet port |
| 84, 184: | outlet port | 90, 190: | top frame |
| 192: | adhesive | 195: | relay device cover |
| H1: | distribution hole | H2: | recovery hole |
| M: | cell array space | V: | vehicle |

## Claims

1. A battery pack, comprising:
a pack housing comprising a bottom plate, an outer frame, and a partition frame; and
a plurality of battery cell assemblies accommodated in the pack housing,
wherein inside the outer frame and the partition frame, a flow path where a cooling fluid is able to flow, and a distribution hole and a recovery hole communicating with the flow path are provided, and thus
the cooling fluid is introduced toward the battery cell assembly to directly cool battery cells in the battery cell assembly.

2. The battery pack according to claim 1, wherein at least a portion of the outer frame and the partition frame is a hollow metal square pipe.

3. The battery pack according to claim 1, wherein at least a portion of the outer frame and the partition frame comprises hollows, and the hollows of the outer frame and the partition frame are connected to form the flow path, wherein the flow path has a structure of at least two layers stacked in the vertical direction.

4. The battery pack according to claim 1, wherein the battery cell assembly comprises a plurality of cylindrical secondary batteries arrayed along columns and rows and standing upright in the vertical direction as the battery cells, a longitudinal dimension of the battery cell assembly is greater than a widthwise dimension, and a longitudinal direction of the battery cell assembly is located along a front-back direction of the battery pack.

5. The battery pack according to claim 4, wherein the outer frame comprises a pair of side frames disposed respectively on both sides in a left-right direction on the bottom plate, and a front frame and a rear frame disposed respectively on both sides in a front-back direction, and
the partition frame comprises a cross frame disposed in a front-back direction on the bottom plate or a center frame disposed in a left-right direction on the bottom plate,
wherein an internal space of the pack housing is divided into a plurality of cell array spaces by the partition frame, and the battery cell assembly is individually seated in each of the cell array spaces.

6. The battery pack according to claim 5, wherein the side frame, the front frame, and the cross frame are formed in the form of a hollow square pipe, and one or more ribs dividing an internal space into upper and lower parts are provided in the height direction to allow the hollow internal space to be partitioned into a plurality of parts in the height direction, so that a multilayer structure in which the flow paths are stacked in the height direction is provided, and the flow paths are configured such that lower-layer flow paths of the side frame, the front frame, and the cross frame communicate with each other, and upper-layer flow paths of the side frame, the front frame, and the cross frame communicate with each other.

7. The battery pack according to claim 6, wherein the distribution hole is formed at a position in which each of the cell array spaces communicates with the upper-layer flow paths, and the recovery hole is formed at a position in which each of the cell array spaces communicates with the lower-layer flow paths.

8. The battery pack according to claim 7, wherein an inlet port for introducing the cooling fluid is formed at a position communicating with the upper-layer flow paths, and an outlet port for discharging the cooling fluid is provided at a position communicating with the lower-layer flow paths.

9. The battery pack according to claim 8, wherein the inlet port and the outlet port are provided in the front frame.

10. The battery pack according to claim 8, wherein the distribution holes are located on an inner side of the right side frame and a left side surface of the cross frame, and the recovery holes are located on a right side surface of the cross frame and an inner side of the left side frame, so that the cooling fluid is directly introduced into each of the cell array spaces from a longitudinal side of the battery cell assembly through the distribution hole, and is recovered from a longitudinal side of the battery cell assembly through the recovery hole.

11. The battery pack according to claim 5, wherein the distribution holes and the recovery holes are disposed to correspond to each of the battery cell assemblies in the outer frame and the partition frame surrounding the cell array space, and the cooling fluid in the flow path is distributed to each of the cell array spaces and recovered and discharged along an independent discharge path.

12. The battery pack according to claim 1, wherein the pack housing comprises a top opening, and further comprises a filling member sealing the top opening.

13. The battery pack according to claim 12, wherein the filling member is provided with a potting resin.

14. The battery pack according to claim 12, further comprising a top frame adhered and coupled to a top surface of the outer frame by an adhesive.

15. The battery pack according to claim 4, wherein the battery cell comprises a vent portion at a bottom, and
the bottom plate comprises a press-molded groove portion to allow the battery cell assembly to be seated thereon and
further comprises a plastic supporter on the groove portion,
wherein gas or flame ejected through the vent portion moves along a venting flow path defined by the plastic supporter in the groove portion.

16. The battery pack according to claim 12, wherein to maintain a dense arrangement of the battery cells, the battery cell assembly comprises:
a holder accommodating a lower portion of the battery cell;
a middle frame supporting a position that is higher than the position supported by the holder in the battery cell; and
an adhesive member fixing the holder and the battery cell.

17. The battery pack according to claim 16, wherein the holder comprises:
a body having a plurality of receiving grooves disposed side by side with each other so that each of the battery cells is inserted; and
a spacer included between the receiving grooves and configured to maintain a gap between the battery cells.

18. The battery pack according to claim 16, wherein a cooling flow path space is formed between the holder and the middle frame to allow the cooling fluid to be filled, and the middle frame isolates the cooling fluid from the filling member.

19. A vehicle comprising a battery pack according to any one of claims 1 to 18.
